# EUROPEAN PATENT SPECIFICATION

(11) **EP 3 433 985 B1**
(45) Date of publication and mention of the grant of the patent: **27.01.2021**
(21) Application number: 17770715.5
(22) Date of filing: 23.03.2017
(51) Int. Cl.: H04L 12/815, G06F 9/38, G06F 15/80, H04W 28/10, G06F 9/50, H04L 12/803, H04L 12/819, H04L 12/823

(54) **METHOD FOR TRAFFIC SHAPING USING A SERIAL PACKET PROCESSING ALGORITHM AND A PARALLEL PACKET PROCESSING ALGORITHM**
VERFAHREN ZUR VERKEHRSFORMUNG MITTELS EINES SERIELLEN PAKETVERARBEITUNGSALGORITHMUS UND PARALLELER PAKETVERARBEITUNGSALGORITHMUS
PROCÉDÉ DE MISE EN FORME DU TRAFIC UTILISANT UN ALGORITHME DE TRAITEMENT DE PAQUETS EN SÉRIE ET UN ALGORITHME DE TRAITEMENT DE PAQUETS EN PARALLÈLE

(30) Priority: 23.03.2016 SE 1600105; 23.03.2016 US 201662312146 P
(43) Date of publication of application: 30.01.2019
(73) Proprietor: Clavister AB, 891 60 Örnsköldsvik (SE)
(72) Inventor: SVANBERG, Rebecka, 871 40 HÄRNÖSAND (SE)
(74) Representative: Ehrner & Delmar Patentbyrå AB
(86) International application number: PCT/SE2017/050279
(87) International publication number: WO 2017/164804

(56) References cited:
- WO-A2-2004/044733
- US-A1- 2003 067 913
- US-A1- 2008 301 408
- US-A1- 2010 322 071
- US-A1- 2011 310 742
- US-A1- 2014 169 378
- US-A1- 2014 281 385
- US-A1- 2014 281 385

## Description

### Technical Field

The invention relates to a method for traffic shaping by use of a network node of a packet switched network. The invention also relates to a network node of a packet switched network arranged for traffic shaping. Furthermore, the invention also relates to a computer program, and a computer program product implementing the method.

### Background

Traffic shaping may be used for enforcing limits, priorities and/or fair sharing of network resources in a packet-switched network, such as e.g. a packet switched computer network. Most traffic shaping methods are based on the token bucket algorithm, the hierarchical token bucket algorithm (which is used e.g. by Linux) or similar algorithms. Also, some traffic shaping methods are based on the generic cell algorithm (GCRA). An existing method to prioritize packet-switched network traffic is to use different packet queues for different priority levels, and then to forward packets from the queues in the order of their priorities. The number of packets sent to the dequeuing device is then often controlled by the token bucket algorithm, or a similar algorithm.

The traffic shaping algorithm may be executed in a network node, such as e.g. in a firewall device, a router device, a gateway device, a media gateway device, or another suitable device through which packets in the network pass. Generally, the traffic shaping may be performed on packets of essentially any kind of traffic flowing through the network node, such as e.g. client-to-server traffic, peer-to-peer traffic, server-to-server traffic, or essentially any other kind of network traffic.

With the increasing demands of today for computational power and increasing network loads, increasing numbers of CPUs and/or CPU cores are utilized for processing packets in network nodes. The basic idea is then to take advantage of the increased computational power of the increasing numbers of CPUs and/or CPU cores when processing the packets. It is, however, a difficult to make efficient use of such multi-CPU and/or multi-CPU core solutions.

Documents US 2014/281385, US 2010/322071, and US 2011/310742 disclose conventional solutions for traffic shaping. In document US 2014/281385 packets are processed with multiple processors working in a pipeline mode or a parallel mode. Document US 2010/322071 disclose rate limiting in a system with a plurality of processors which may operate in parallel and document US 2011 /310742 discloses bandwidth allocation in a network appliance based on bandwidth buckets.

However, the above mentioned known traffic shaping algorithms all have packet processing efficiency problems. These problems of the known algorithms are at least partly related to the fact that the algorithms are developed, and also optimized, for single-threaded use for network nodes having one single CPU and/or one single CPU core. Thus, known traffic shaping algorithms of today have efficiency problems, that become more and more noticeable with increasing packet traffic in the network.

### Summary

An object of the embodiments of the invention is to provide a solution which mitigates or solves the above mentioned drawbacks and problems.

The above object and further object are achieved by the subject matter of the independent claims. Further advantageous implementation forms of the invention are defined by the dependent claims. Embodiments which do not fall in the scope of the appended set of claims are to be interpreted as background information useful for understanding the invention.

According to a first aspect of the invention, a method for traffic shaping, for example by use of a network node of a packet switched network, is presented. Packets may be processed to be transmitted in the network according to at least:
- a serial packet processing algorithm Aₛₑᵣ providing a synchronized utilization of a set S_{PU} of at least two processing units PU₁, PU₂, ..., PUₙ, wherein only one of the at least two processing units (PU₁; PU₂; ..., PUₙ; 151; 152; ...; 15n) processes the packets at a given time and the packets are processed one by one in a synchronized manner; and
- a parallel packet processing algorithm Aₚₐᵣ providing an at least partly unsynchronized utilization of the set S_{PU} of the at least two processing units PU₁, PU₂,..., PUₙ, wherein the at least two processing units (PU₁, PU₂, ..., PUₙ; 151, 152, ..., 15n) process the packets in parallel in an at least partly unsynchronized manner; wherein
- the processing of the packets corresponds to a total packet cost Ctot, which is cooperatively shared by the at least two processing units PU₁, PU₂, ... PUₙ of the set S_{PU}. The method further includes:
- determining, when the processing according to the parallel packet processing algorithm Aₚₐᵣ is used for processing the packets, if shares C₁, C₂, ..., Cₙ of the total packet cost Cₜₒₜ for one or more of the at least two processing units PU₁, PU₂,..., PUₙ exceed a capacity to process packets for the at least two processing units PU₁, PU₂,..., PUₙ, respectively, wherein each one of the shares C₁, C₂, ..., Cₙ corresponds to one or more packet; and
- switching from the processing according to the parallel packet processing algorithm Aₚₐᵣ to processing according to the serial packet processing algorithm Aₛₑᵣ if the shares C₁, C₂, ..., Cₙ of the total packet cost Ctot for one or more of the at least two processing units PU₁, PU₂,..., PUₙ, respectively, is determined to exceed the capacity .

Thus, the packets may be processed/executed/computed/calculated at least partly according to a parallel mode/algorithm Aₚₐᵣ. The present invention is very suitable for work running in parallel over multiple (at least two) processing units, such as e.g. multiple CPU cores, which is very advantageous. In principle, an unlimited number of processing units, e.g. CPU cores, may be used for processing the data/information/packets/traffic when the present invention is utilized.

If there is an enough degree of freedom/changeability of phases, i.e. if there is a possibility for at least partly processing the packets according to the parallel mode/algorithm Aₚₐᵣ, the method/algorithm steps traditionally having been performed by a set of synchronized serial processing units may, when the present invention is used, be split/spread/distributed to the processing units of the set S_{PU} using the at least partly unsynchronized parallel mode/algorithm Aₚₐᵣ.

Generally described, if at least one of the parallel/unsynchronized processing units cannot guarantee a proper/exact execution of the method/algorithm steps having been assigned to it, the remaining method/algorithm steps, corresponding to remaining packets, that should have been executed by the parallel/unsynchronized processing units may, according to an embodiment, be gathered/collected/assembled again. The remaining method/algorithm steps, i.e. the remaining packets, having been gathered/collected/assembled may then then processed executed/computed/calculated according to the serial packet processing algorithm Aₛₑᵣ.

This works well e.g. if it is possible to accumulate degrees of freedom/changeability of phases while the packets are handled by serial mode/algorithm processing. If the parallel processing algorithm Aₚₐᵣ is well balanced over the set S_{PU} of processing units, the probability for the processing to be able to continue in the parallel mode Aₚₐᵣ is increased. For example, if the packet processing according to the parallel algorithm Aₚₐᵣ is completely balanced, there is no need to return/go back to the serial mode/algorithm Aₛₑᵣ processing again, which lowers the demands on the serial mode processing. In practical implementations, however, there might be a need for switching between the serial Aₛₑᵣ and parallel Aₚₐᵣ modes/algorithms, based on the balance of the traffic/work load/processing for the processing units for the parallel mode/algorithm.

According to an embodiment of the first aspect, the at least partly unsynchronized parallel packet processing algorithm Aₚₐᵣ further includes:
- prioritizing processing based on priority levels P_{high}; P_{low} related to the at least two processing units PU₁, PU₂,..., PUₙ of the set S_{PU}, whereby:
- a processing unit PU_{high} related to a higher priority P_{high} is allowed to process packets and to charge a fractional debt D_{1_frac}, D_{2_frac}, ..., D_{n_frac} corresponding to the processing of the packets to one or more processing unit PU_{low} of the set S_{PU} related to a lower priority P_{low}; and
- the shares C₁, C₂, ..., Cₙ of the total packet cost Ctot for the at least two processing units PU₁, PU₂,..., PUₙ, respectively, include both fractional packet costs C_{1_frac}, C_{2_frac}, ..., C_{n_frac} and fractional debts D_{1_frac}, D_{2_frac}, ..., D_{n_frac}; C₁ = C_{1_frac} + D_{1_frac}, C₂ = C_{2_frac} + D_{2_frac}, ..., Cₙ = C_{n_frac} + D_{n_frac}.

In other words, a prioritized packet processing is provided by the embodiment, which handles priority steps/tasks/issues by usage of at least partly independent limitation/limited units, such as e.g. tokens and/or token buckets. Each one of these limitation/limited units may then be assigned/related to a specific certain priority, e.g. a low priority P_{low}, such that a packet assigned a specified/certain priority only passes through the specific limitation/limited unit having been assigned that specific/certain priority, e.g. the low priority P_{low}.

A packet assigned a higher priority P_{high} may instead pass through a specific/certain limitation/limited unit having been assigned that specific/certain higher priority P_{high}, but the cost for this higher priority packet/processing may be carried/debited to units assigned/related to a lower priority P_{low}. Hereby, the limiting/limited units may be similar, e.g. more or less identical, and/or may be independent, which makes it possible to execute the extra debiting of the units assigned/related to the lower priority P_{low} in parallel. For example, this parallel debiting may be achieved by sending a virtual packet, where the virtual packet is configured to execute the debiting. This may be implemented such that the result is completely parallelized.

According to an embodiment of the first aspect, the fractional debts D_{1_frac}, D_{2_frac}, ..., D_{n_frac} are decremented over time when processing according to the parallel packet processing algorithm Aₚₐᵣ is used.

According to an embodiment of the first aspect,
- an at least partly unsynchronized processing unit PU₁, PU₂,..., PUₙ, which processes packets according to the parallel packet processing algorithm Aₚₐᵣ and for which the share C₁, C₂, ..., Cₙ of the total packet cost Ctot exceeds its capacity to process packets, is incapable to determine if the set S_{PU} of at least two processing units PU₁, PU₂,..., PUₙ as a whole is able to process the packets; and
- the at least partly unsynchronized processing unit PU₁, PU₂,..., PUₙ requests for the switch to the processing according to the serial packet processing algorithm Aₛₑᵣ as a result of its incapability to determine if the set S_{PU} of at least two processing units PU₁, PU₂,..., CPUₙ as a whole is able to process the packets.

According to an embodiment of the first aspect, one or more of the at least two processing units PU₁, PU₂,..., PUₙ are one in the group of:
- a central processing unit (CPU); and
- a central processing unit core.

According to an embodiment of the first aspect:
- the parallel packet processing algorithm Aₚₐᵣ is an at least partly unsynchronized token bucket algorithm;
- the total packet cost Cₜₒₜ is related to a total number of tokens Nₜₒₜ;
- the total number of tokens Nₜₒₜ is portioned over the set S_{PU} as fractional numbers of tokens N₁, N₂, ..., Nₙ for the at least partly unsynchronized at least two processing units PU₁, PU₂,..., PUₙ, respectively
- the shares C₁, C₂, ..., Cₙ of the total packet cost Cₜₒₜ are related to the fractional numbers of tokens N₁, N₂, ..., Nₙ, respectively.

According to an embodiment of the first aspect: the share C₁, C₂, ..., Cₙ of the total packet cost Ctot for a processing unit PU₁, PU₂,..., PUₙ is determined to exceed its capacity to process packets if one or more is true in the group of:
- the share C₁, C₂, ..., Cₙ of the processing unit PU₁, PU₂,..., PUₙ exceeds its fractional number of tokens N₁, N₂, ..., Nₙ; C₁>N₁, C₂>N₂, ..., Cₙ>Nₙ; and
- the processing unit PU₁, PU₂,..., PUₙ has zero (0) fractional number of tokens left, N₁=0, N2=0, ..., Nₙ=0.

According to an embodiment, the degrees of freedom/changeability of phases is related to a number of tokens of a token bucket. Then, there might be enough degree of freedom/changeability of phases if the token bucket includes, i.e. is filled with, enough tokens per parallel packet computing/algorithm processing unit to distribute at least one token per parallel packet computing/algorithm processing unit. Thus, the set S_{PU} of processing units providing the parallel packet processing may, according to an embodiment, guarantee/provide a proper packet processing as long as they still have tokens, i.e. as long as they have not used up their respective fractional numbers of tokens N₁, N₂, ..., Nₙ.

According to an embodiment, the degrees of freedom/changeability of phases may be related to a generic algorithm. Then, there might be an enough degree of freedom/changeability of phases if the received traffic exceeds a threshold/limit, where the threshold/limit may indicate an allowed traffic limit, and/or if the set S_{PU} of processing units processing packets according to the parallel algorithm Aₚₐᵣ can guarantee/provide a proper packet processing as long as the received traffic exceeds the threshold/limit. For traffic shaping, the threshold/limit is often set by a network administrator, and the threshold/limit may then be chosen to a suitable value. For example, the network traffic of one sort/type may be measured/determined, e.g. in bits per second, and the threshold/limit is then set to the maximal determined/measured traffic value, e.g. to the maximal bits per second, that sort/type of traffic is allowed to use. Generally, by limiting some sorts/types of traffic, more resources are made available for other types of traffic. It should be noted that the embodiments described in this documents may be implemented using a generic algorithm, although often being described herein for the token bucket algorithm.

According to an embodiment, which is mainly described in this document, the herein described traffic shaping method/algorithm for packet processing/executing/computing/calculating is at least temporarily and at least partly performed in a parallel mode Aₚₐᵣ and is combined with a token bucket method/algorithm. A token bucket algorithm is a method/algorithm implementing limitations in a network, as is herein described. The token bucket method/algorithm may be implemented with little addition to computational complexity. Thus, the token bucket method/algorithm may also be applied for the herein described packet processing methods. This results in an efficient and at least partly parallel packet processing/executing/computing/calculating method/algorithm, which processes/executes/computes/calculates the packets in accordance with the principles of the token bucket method/algorithm.

According to an embodiment of the first aspect, the fractional numbers of tokens N₁, N₂, ..., Nₙ are incremented over time when processing according to the parallel packet processing algorithm Aₚₐᵣ is used.

According to an embodiment of the first aspect, the method further includes:
- summing up all of the fractional numbers of tokens N₁, N₂, ..., Nₙ to an accumulated total number of tokens Nₜₒₜ; Nₜₒₜ = N₁ + N₂ + ...+ Nₙ;
- summing up all shares C₁, C₂, ..., Cₙ to an accumulated total cost Cₜₒₜ; and
- utilizing the total number of tokens Nₜₒₜ and/or the total cost Cₜₒₜ when switching to processing according to the serial packet processing algorithm Aₛₑᵣ and/or when switching to processing according to a drop mode algorithm A_{drop}.

According to an embodiment of the first aspect, the serial packet processing algorithm Aₛₑᵣ includes:
- incrementing a total number of tokens Nₜₒₜ over time faster than tokens are spent by the serial packet processing algorithm Aₛₑᵣ; and
- switching from processing according to the serial packet processing algorithm Aₛₑᵣ to the processing according to the parallel packet processing algorithm Aₚₐᵣ when the total number of tokens Nₜₒₜ is higher than a parallel processing threshold value N_{tot_par}; Nₜₒₜ > N_{tot_par}.

According to an embodiment of the first aspect, the parallel processing threshold value N_{tot_par} is increased with a value N_{debt_sum} corresponding to a total debt Dₜₒₜ when the total cost Cₜₒₜ includes the total debt Dₜₒₜ.

According to an embodiment of the first aspect, the method further includes:
- switching from processing according to the serial packet processing algorithm Aₛₑᵣ to processing according to a drop mode algorithm A_{drop}; and
- processing the packets according to the drop mode algorithm A_{drop} using the set S_{PU} of the at least partly unsynchronized at least two processing units PU₁, PU₂,..., PUₙ if at least one is true in the group of:
- the total number of tokens Ntot has a value of zero (0); Nₜₒₜ = 0; and
- the total cost Cₜₒₜ exceeds a total number of tokens Nₜₒₜ; Cₜₒₜ > Nₜₒₜ.

According to an embodiment of the first aspect, the processing according to the drop mode algorithm A_{drop} includes one or more actions in the group of:
- dropping at least one packet;
- queueing at least one packet; and
- transmitting at least one packet labelled as non-conformant.

The serial mode/algorithm Aₛₑᵣ packet processing may be used for queueing packets. When the parallel mode/algorithm Aₚₐᵣ packet processing is used, no packets need to be queued, since at least one traffic characteristic, such as e.g. bits per second and/or packets per second, is lower than a configured threshold/limit. When the configured threshold/limit is exceeded, packets are received faster than they can be passed on. If this happens, and the packet queue is full, the algorithm calculates how long time it will take until it will be possible to pass at least one network packet. During this time, all packets arriving will have to be discarded/thrown away or have to be queued, i.e. in the drop mode A_{drop}. When the packet queue is full, i.e. exceeds the configured threshold/limit, there is no need for queueing packets in the drop mode A_{drop} either, since the packets would then only be discarded anyway. Thus, the advantages of a packet queue are achieved, but the method/algorithm/queue only needs synchronization when the serial mode/algorithm Aₛₑᵣ is active/used, i.e. when the access is synchronized anyway.

According to an embodiment of the first aspect, the method further includes, if a total number of tokens Nₜₒₜ exceeds the total cost Cₜₒₜ; Nₜₒₜ > Cₜₒₜ:
- switching from processing according to the drop mode algorithm A_{drop} to processing according to the serial packet processing algorithm Aₛₑᵣ; and
- processing the packets according to the serial mode algorithm Aₛₑᵣ.

Thus, the packet processing may be switched over to the serial packet processing algorithm Aₛₑᵣ from the drop mode algorithm A_{drop}.

When traffic amounts are above the configured threshold/limit, the packet processing may in some situations temporarily switch over to serial packet processing Aₛₑᵣ, only to process a single packet. After that single packet has been processed, the packet processing would then immediately switch back to drop mode processing A_{drop}. As an optimization, the algorithm can according to an embodiment be extended to allow exactly one of the processing units of the set S_{PU}; 150 to temporary be switched into the serial mode processing Aₛₑᵣ. For example, the temporary switch to the serial mode/algorithm Aₛₑᵣ may be effected by a try-lock mutex and/or by an atomic compare and set (CAS) operation, possibly depending on how the serial mode/algorithm Aₛₑᵣ is implemented. According to the CAS operation, a known value is compared with a position/space in the computer/processor memory, and if the known value is stored in the memory it is atomically replaced/over-written with another value. If the known value is not present/stored in the memory position, nothing is written into the memory and the operation signals failure. For example, the known value may be a timestamp that is overwritten with the current time indication. Thus, only one processing unit will be able to successfully make a temporary switch to serial mode processing Aₛₑᵣ. Hereby, traffic amounts above the configured threshold/limit may be handled in parallel, at the same time as serial updates of packet queues and/or tokens may be effected. While only one processing unit will be successful in making the temporary switch to serial mode processing Aₛₑᵣ, this is here only done when one packet is to be passed. Hereby, all processing units of the set S_{PU} are making progress anyway, and a wait-free/non-blocking algorithm extension is achieved.

According to an embodiment of the first aspect, the method further includes:
- defining a set of at least one active group G₁, G₂,...G_{K}, each group being related to one or more devices receiving packets via the network node; and
- allocating at least one bandwidth portion of an available bandwidth in the network for the at least one active group G₁, G₂,...G_{K} of the set, respectively, wherein the allocating is performed in parallel and at least partly unsynchronized for the at least one active group G₁, G₂,...G_{K}.

According to an embodiment of the first aspect, the at least one client group G₁, G₂,...G_{K} is related to one or more in the group of:
- at least one source internet protocol (IP) address;
- at least one destination internet protocol (IP) address;
- at least one source network;
- at least one destination network;
- at least one source port;
- at least one destination port;
- at least one receiving interface;
- at least one forwarding interface;
- at least one parameter related to application layer data; and
- at least one partition of network traffic.

According to an embodiment of the first aspect, the allocating of the at least one bandwidth portion is performed such that the available bandwidth is essentially equally divided between the at least one group G₁, G₂,...G_{K}.

According to an embodiment of the first aspect, the allocating of the at least one bandwidth portion further includes:
- determining if one or more bandwidth portions of the at least one group G₁, G₂,...G_{K} is unused;and
- reallocating the one or more unused bandwidth portions to one or more other of the at least one group G₁, G₂,...G_{K} being in need of more bandwidth.

According to an embodiment of the first aspect, the one or more groups G₁, G₂,...G_{K} being in need of more bandwidth compete with each other for the one or more bandwidth portions being reallocated.

According to a second aspect of the invention, a network node is presented, the network node including a processing device arranged for processing packets to be transmitted in the network according to at least:
- a serial packet processing algorithm Aₛₑᵣ providing a synchronized utilization of a set S_{PU} of at least two processing units PU₁, PU₂, ..., PUₙ, wherein only one of said at least two processing units (PU₁; PU₂; ..., PUₙ; 151; 152; ...; 15n) processes the packets at a given time and the packets are processed one by one in a synchronized manner; and
- a parallel packet processing algorithm Aₚₐᵣ providing an at least partly unsynchronized utilization of the set S_{PU} of the at least two processing units PU₁, PU₂,..., PUₙ, wherein said at least two processing units (PU₁, PU₂, ..., PUₙ; 151, 152, ..., 15n) process the packets in parallel in an at least partly unsynchronized manner; wherein

- the processing of the packets corresponds to a total packet cost Cₜₒₜ, which is cooperatively shared by the at least two processing units PU₁, PU₂, ... PUₙ of the set S_{PU}. The processing device is further arranged for:
- determining, when the processing according to the parallel packet processing algorithm Aₚₐᵣ is used for processing the packets, if shares C₁, C₂, ..., Cₙ of the total packet cost Cₜₒₜ for one or more of the at least two processing units PU₁, PU₂,..., PUₙ exceed a capacity to process packets for the at least two processing units PU₁, PU₂,..., PUₙ, respectively, wherein each one of the shares C₁, C₂, ..., Cₙ corresponds to one or more packet; and
- switching from the processing according to the parallel packet processing algorithm Aₚₐᵣ to processing according to the serial packet processing algorithm Aₛₑᵣ if the shares C₁, C₂, ..., Cₙ of the total packet cost Cₜₒₜ for one or more of the at least two processing units PU₁, PU₂,..., PUₙ, respectively, is determined to exceed the capacity.

According to an embodiment of the second aspect, the processing device is arranged for in the at least partly unsynchronized parallel packet processing algorithm Aₚₐᵣ further including:
- prioritizing processing based on priority levels P_{high}; P_{low} related to the at least two processing units PU₁, PU₂,..., PUₙ of the set S_{PU}, whereby:
- a processing unit PU_{high} related to a higher priority P_{high} is allowed to process packets and to charge a fractional debt D_{1_frac}, D_{2_frac}, ..., D_{n_frac} corresponding to the processing of the packets to one or more processing unit PU_{low} of the set S_{PU} related to a lower priority P_{low}; and
- the shares C₁, C₂, ..., Cₙ of the total packet cost Ctot for the at least otwo processing units PU₁, PU₂,..., PUₙ, respectively, include both fractional packet costs C_{1_frac}, C_{2_frac}, ..., C_{n_frac} and fractional debts D_{1_frac}, D_{2_frac}, ..., D_{n_frac}; C₁ = C₁__{frac} + D_{1_frac}, C₂ = C_{2_frac} + D_{2_frac}, ..., Cₙ = C_{n_frac} + D_{n_frac}.

According to an embodiment of the second aspect, the processing device is arranged for decrementing the fractional debts D_{1_frac}, D_{2_frac}, ..., D_{n_frac} over time when processing according to the parallel packet processing algorithm Aₚₐᵣ is used.

According to an embodiment of the second aspect, the processing device is arranged for:
- determining an at least partly unsynchronized processing unit PU₁, PU₂,..., PUₙ, which processes packets according to the parallel packet processing algorithm Aₚₐᵣ and for which the share C₁, C₂, ..., Cₙ of the total packet cost Ctot exceeds its capacity to process packets, as incapable to determine if the set S_{PU} of at least two processing units PU₁, PU₂,..., PUₙ as a whole is able to process the packets; and
- requesting, by use of the at least partly unsynchronized processing unit PU₁, PU₂,..., PUₙ, for the switch to the processing according to the serial packet processing algorithm Aₛₑᵣ as a result of its incapability to determine if the set S_{PU} of at least two processing unist PU₁, PU₂,..., CPUₙ as a whole is able to process the packets.

According to an embodiment of the second aspect, one or more of the at least two processing units PU₁, PU₂, ..., PUₙ are one in the group of:
- a central processing unit (CPU); and
- a central processing unit core.

According to an embodiment of the second aspect,
- the parallel packet processing algorithm Aₚₐᵣ is an at least partly unsynchronized token bucket algorithm;
- the total packet cost Cₜₒₜ is related to a total number of tokens Nₜₒₜ;
- the total number of tokens Nₜₒₜ is portioned over the set S_{PU} as fractional numbers of tokens N₁, N₂, ..., Nₙ for the at least partly unsynchronized at least two processing units PU₁, PU₂,..., PUₙ, respectively
- the shares C₁, C₂, ..., Cₙ of the total packet cost Cₜₒₜ are related to the fractional numbers of tokens N₁, N₂, ..., Nₙ, respectively.

According to an embodiment of the second aspect, the processing device is arranged to determine the share C₁, C₂, ..., Cₙ of the total packet cost Ctot for a processing unit PU₁, PU₂,..., PUₙ; 151, 152, ..., 15n to exceed its capacity to process packets if one or more is true in the group of:
- the share C₁, C₂, ..., Cₙ of the processing unit PU₁, PU₂,..., PUₙ exceeds its fractional number of tokens N₁, N₂, ..., Nₙ; C₁>N₁, C₂>N₂, ..., Cₙ>Nₙ; and
- the processing unit PU₁, PU₂,..., PUₙ has zero (0) fractional number of tokens left, N₁=0, N₂=0, ..., Nₙ=0.

According to an embodiment of the second aspect, the processing device is arranged to increment the fractional numbers of tokens N₁, N₂, ..., Nₙ over time when processing according to the parallel packet processing algorithm Aₚₐᵣ is used.

According to an embodiment of the second aspect, the processing device is further arranged for:
- summing up all of the fractional numbers of tokens N₁, N₂, ..., Nₙ to an accumulated total number of tokens Nₜₒₜ; Nₜₒₜ = N₁ + N₂ + ...+ Nₙ;
- summing up all shares C₁, C₂, ..., Cₙ to an accumulated total cost Cₜₒₜ; and
- utilizing the total number of tokens Nₜₒₜ and/or the total cost Cₜₒₜ when switching to processing according to the serial packet processing algorithm Aₛₑᵣ and/or when switching to processing according to a drop mode algorithm A_{drop}.

According to an embodiment of the second aspect, the processing device is arranged to in the serial packet processing algorithm Aₛₑᵣ include:
- incrementing a total number of tokens Nₜₒₜ over time faster than tokens are spent by the serial packet processing algorithm Aₛₑᵣ; and
- switching from processing according to the serial packet processing algorithm Aₛₑᵣ to the processing according to the parallel packet processing algorithm Aₚₐᵣ when the total number of tokens Nₜₒₜ is higher than a parallel processing threshold value N_{tot_par}; Nₜₒₜ > N_{tot_par}.

According to an embodiment of the second aspect, the processing device is arranged to increase the parallel processing threshold value N_{tot_par} with a value N_{debt_sum} corresponding to a total debt Dₜₒₜ when the total cost Cₜₒₜ includes the total debt Dₜₒₜ.

According to an embodiment of the second aspect, the processing device is further arranged to:
- switching from processing according to the serial packet processing algorithm Aₛₑᵣ to processing according to a drop mode algorithm A_{drop}; and
- processing the packets according to the drop mode algorithm A_{drop} using the set S_{PU} of the at least partly unsynchronized at least two processing units PU₁, PU₂,..., PUₙ if at least one is true in the group of:
- the total number of tokens Ntot has a value of zero (0); Nₜₒₜ = 0; and
- the total cost Cₜₒₜ exceeds a total number of tokens Nₜₒₜ; Cₜₒₜ > Nₜₒₜ.

According to an embodiment of the second aspect, the processing device is arranged to in processing according to the drop mode algorithm A_{drop} include one or more actions in the group of:
- dropping at least one packet;
- queueing at least one packet; and
- transmitting at least one packet labelled as non-conformant.

According to an embodiment of the second aspect, the processing device is further arranged for, if a total number of tokens Nₜₒₜ exceeds the total cost Cₜₒₜ; Ntot > Cₜₒₜ:
- switching from processing according to the drop mode algorithm A_{drop} to processing according to the serial packet processing algorithm Aₛₑᵣ; and
- processing the packets according to the serial mode algorithm Aₛₑᵣ.

According to an embodiment of the second aspect, the processing device is further arranged for:
- defining a set of at least one active group G₁, G₂,...G_{K}, each group being related to one or more devices receiving packets via the network node; and
- allocating at least one bandwidth portion of an available bandwidth in the network for the at least one active group G₁, G₂,...G_{K} of the set, respectively, wherein the allocating is performed in parallel and at least partly unsynchronized for the at least one active group G₁, G₂,...G_{K}.

According to an embodiment of the second aspect, the processing device is arranged to relate the at least one client group G₁, G₂,...G_{K} to one or more in the group of:
- at least one source internet protocol (IP) address;
- at least one destination internet protocol (IP) address;
- at least one source network;
- at least one destination network;
- at least one source port;
- at least one destination port;
- at least one receiving interface;
- at least one forwarding interface;
- at least one parameter related to application layer data; and
- at least one partition of network traffic.

According to an embodiment of the second aspect, the processing device is arranged to perform the allocating of the at least one bandwidth portion such that the available bandwidth is essentially equally divided between the at least one group G₁, G₂,...G_{K}.

According to an embodiment of the second aspect, the processing device is arranged for in the allocating of the at least one bandwidth portion further include:
- determining if one or more bandwidth portions of the at least one group G₁, G₂,...G_{K} is unused;and
- reallocating the one or more unused bandwidth portions to one or more other of the at least one group G₁, G₂,...G_{K} being in need of more bandwidth.

According to an embodiment of the second aspect, the processing device is arranged for having the one or more groups G₁, G₂,...G_{K} being in need of more bandwidth compete with each other for the one or more bandwidth portions being reallocated.

The advantages for any network node according to the second aspect of the present invention are the same as for the corresponding method according to the first aspect.

Embodiments of the invention also relate to a computer program, characterized in code means, which when run by processing means causes said processing means to execute any method according to the invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the invention will be apparent from the following detailed description.

### Brief Description of the Drawings

The appended drawings are intended to clarify and explain different embodiments of the invention, in which:
- Fig. 1 schematically shows a network node and a network.
- Figs. 2a-f show flow chart diagrams for different embodiments of the method of the present invention.
- Fig. 3 schematically illustrates a processing structure and some parameters.
- Fig. 4 schematically illustrates prioritized processing and debiting.
- Fig. 5 schematically illustrates different packet processing algorithms and switching between them.

### Detailed Description

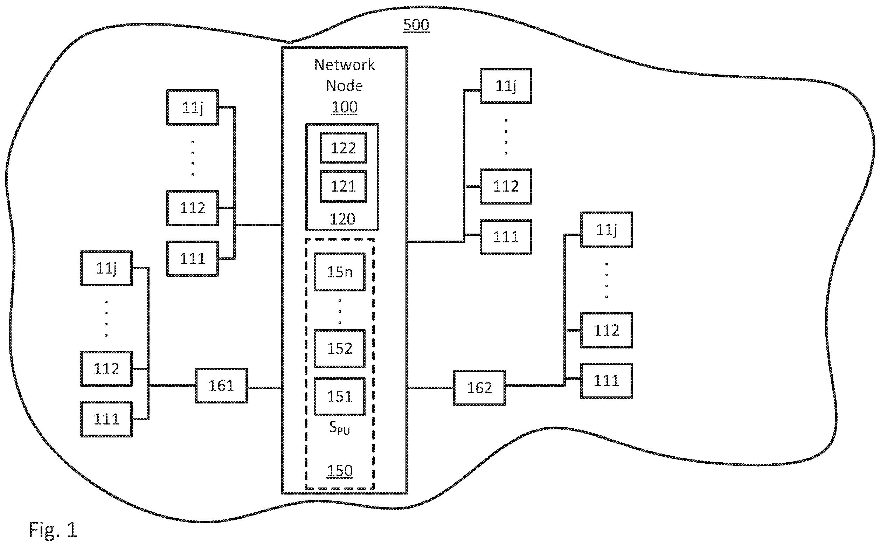

Figure 1 schematically illustrates a packet switched network 500, in which a number of communicating entities 111, 112, ..., 11j, that also may be denoted endpoint entities/users/clients, are connected via a network node 100, and according to some embodiments, also via one or more routers 161, 162 possibly connected to other networks. The communicating entities 111, 112, ..., 11j may be connected to the network node 100 and/or the routers 161, 162 via at least one wide area network (WAN) and/or via at least one local area network (LAN).

The network node 100 may include one or more of a firewall device, a router device, a gateway device, a media gateway device, or another suitable device through which packets are passed. The network node 100 may according to the present invention be arranged for performing traffic shaping on packets of essentially any kind of traffic flowing through the network node.

A network node 100 according to the present invention includes a processing device 120 which is arranged for performing the method of the different embodiments of the present invention, e.g. by means/control units 121, 122 arranged for performing the steps of the method. For simplicity, only two means/control units 121, 122 are shown in figure 1, but there may of course be more than two such means/control units of the processing device 120. The processing device 120 is in figure 1 illustrated as including separately illustrated means/control units 121, 122. These units 121, 122 can, however, be at least to some extent logically separated but implemented in the same physical device. These means/control units 121, 122 may also be part of a single logic unit/device, which is implemented in at least two different physical units/devices. These means/control units 121, 122 may also be at least to some extent logically separated and implemented in at least two different physical units/devices. Further, these means/control units 121, 122 may further be both logically and physically arranged together, i.e. be part of a single logic unit which is implemented in a single physical unit/device. These means/control units 121, 122 may for example correspond to groups of instructions, which can be in the form of programming code, that are input into, and are utilized by, at least one processor when the means/control units are active and/or are utilized for performing its method step, respectively.

The processing device 120 is arranged for performing a serial packet processing algorithm Aₛₑᵣ providing a synchronized utilization of a set S_{PU}; 150 of at least one processing unit PU₁, PU₂, ..., PUₙ; 151, 152, ..., 15n. Each one of the at least one processing unit PU₁, PU₂,..., PUₙ; 151, 152, ..., 15n may in this document e.g. be a central processing unit (CPU) and/or a central processing unit core. The network node 100 is also arranged for performing a parallel packet processing algorithm Aₚₐᵣ providing an at least partly unsynchronized utilization of the set S_{PU}; 150 of at least one processing unit PU₁, PU₂,..., PUₙ; 151, 152, ..., 15n.

The processing of the packets passing through the network node 100 corresponds to a total packet cost Cₜₒₜ. This total packet cost Cₜₒₜ is cooperatively shared by the at least one processing unit PU₁, PU₂, ... PUₙ; 151, 152, ..., 15n of the set S_{PU}; 150.

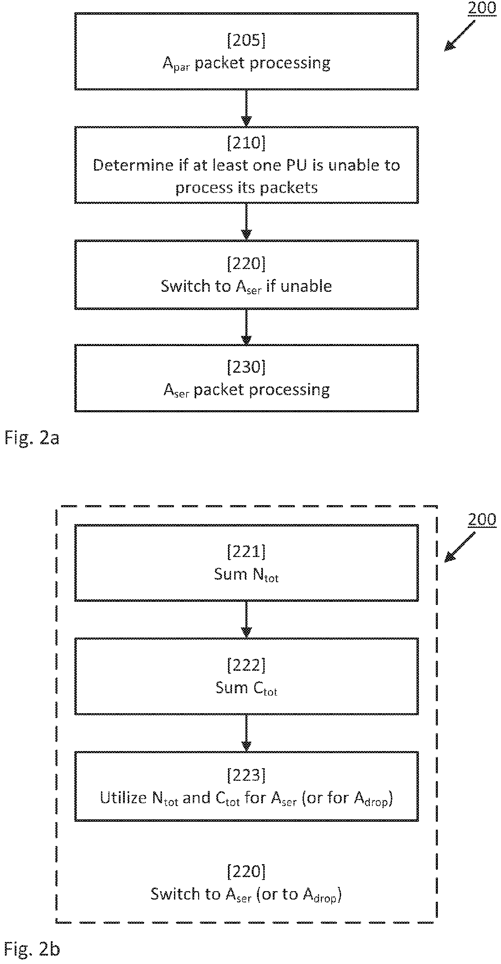

Figure 2a illustrates a method according to an embodiment of the present invention.

In a first step 205, the parallel packet processing algorithm Aₚₐᵣ is used for processing said packets.

In a second step 210, it is determined if shares C₁, C₂, ..., Cₙ of the total packet cost Cₜₒₜ for one or more of the at least one processing units PU₁, PU₂,..., PUₙ; 151, 152, ..., 15n exceed a capacity to process packets for that at least one processing units PU₁, PU₂,..., PUₙ; 151, 152, ..., 15n, respectively. Each one of the shares C₁, C₂, ..., Cₙ here corresponds to one or more packet. Each packet is processed in its entirety by one of the processing units PU₁, PU₂,..., PUₙ; 151, 152, ..., 15n. Thus, it is determined if one or more of the processing units PU₁, PU₂,..., PUₙ; 151, 152, ..., 15n are unable to process its packets. However, different processing units may of course process different whole packets simultaneously, i.e. may process whole/entire packets in parallel.

In a third step 220, the packet processing is switched from processing according to the parallel packet processing algorithm Aₚₐᵣ to processing according to the serial packet processing algorithm Aₛₑᵣ if the shares C₁, C₂, ..., Cₙ of the total packet cost Cₜₒₜ for one or more of the at least one processing units PU₁, PU₂,..., PUₙ; 151, 152, ..., 15n, respectively, is determined in the second step 210 to exceed the capacity. Thus, the packet processing is switched from processing according to the parallel packet processing algorithm Aₚₐᵣ to processing according to the serial packet processing algorithm Aₛₑᵣ if one or more of the processing units PU₁, PU₂,..., PUₙ; 151, 152, ..., 15n are unable to process its packets.

In a fourth step 230, packet processing utilizing the serial packet processing algorithm Aₛₑᵣ is then used.

When processing according to the parallel packet processing algorithm Aₚₐᵣ, the at least partly unsynchronized one or more processing units PU₁, PU₂,..., PUₙ; 151, 152, ..., 15n process packets according to the parallel packet processing algorithm Aₚₐᵣ and are therefore also associated with a corresponding share C₁, C₂, ..., Cₙ of the total packet cost Cₜₒₜ. If one of the unsynchronized processing units PU₁, PU₂,..., PUₙ; 151, 152, ..., 15n exceeds its capacity to process packets, that processing unit knows that it is itself not able to process its part/fraction of the total number of packets to be processed. However, since the processing units are at least partly unsynchronized, that processing unit is incapable to determine if the set S_{PU}; 150 of at least one processing unit PU₁, PU₂,..., PUₙ; 151, 152, ..., 15n as a whole is able to process the packets. Therefore, the processing unit PU₁, PU₂,..., PUₙ; 151, 152, ..., 15n exceeding its capacity to process packets, according to the embodiment, requests for the switch to processing according to the serial packet processing algorithm Aₛₑᵣ. Thus, since the processing unit PU₁, PU₂,..., PUₙ; 151, 152, ..., 15n exceeding its own capacity is incapable to determine if the set S_{PU}; 150 as a whole is able to process said packets, it will request for a switch of processing algorithm.

According to an embodiment of the present invention, the parallel packet processing algorithm Aₚₐᵣ is an at least partly unsynchronized token bucket algorithm. The total packet cost Cₜₒₜ is then related to a total number of tokens Nₜₒₜ. The total number of tokens Nₜₒₜ may then be portioned over the set S_{PU}; 150 as fractional numbers of tokens N₁, N₂, ..., Nₙ for the at least partly unsynchronized at least one processing unit PU₁, PU₂,..., PUₙ; 151, 152, ..., 15n, respectively. Correspondingly, the shares C₁, C₂, ..., Cₙ of the total packet cost Ctot are related to the fractional numbers of tokens N₁, N₂, ..., Nₙ, respectively.

The share C₁, C₂, ..., Cₙ of the total packet cost Cₜₒₜ may, according to an embodiment of the present invention, be determined 210 to exceed the capacity of a processing unit PU₁, PU₂,..., PUₙ; 151, 152, ..., 15n to process packets if the share C₁, C₂, ..., Cₙ of the processing unit PU₁, PU₂,..., PUₙ; 151, 152, ..., 15n exceeds its own fractional number of tokens N₁, N₂, ..., Nₙ; C₁>N₁, C₂>N₂, ..., Cₙ>Nₙ, and/or if the processing unit PU₁, PU₂,..., PUₙ; 151, 152, ..., 15n has zero (0) fractional number of its own tokens left, N₁=0, N₂=0, ..., Nₙ=0.

The fractional numbers of tokens N₁, N₂, ..., Nₙ are incremented over time, i.e. by a fractional quota, up to a maximum limit N_{1_lim}, N_{2_lim}, ..., N_{n_lim}, when processing according to the parallel packet processing algorithm Aₚₐᵣ is used. Of course, these fractional numbers of tokens N₁, N₂, ..., Nₙ are also spent when packets are processed, i.e. the cost for one or more packets to be processed are subtracted from the fractional numbers of tokens N₁, N₂, ..., Nₙ, respectively.

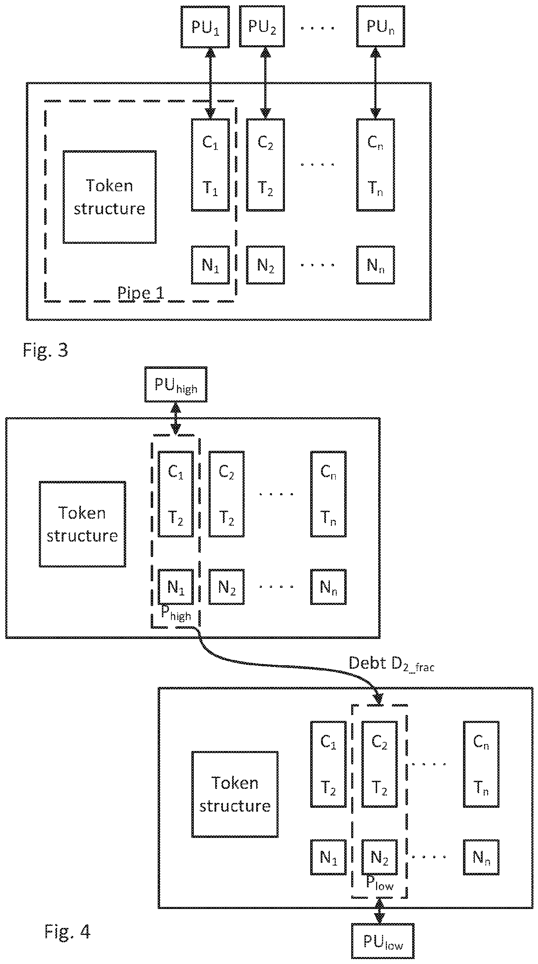

Figure 3 schematically illustrates the shares C₁, C₂, ..., Cₙ of the total packet cost Cₜₒₜ, the fractional number of tokens N₁, N₂, ..., Nₙ and their corresponding time stamps T₁, T₂, ..., Tₙ, the related processing units PU₁, PU₂,..., PUₙ, and a token structure. Also, a concept denoted pipe is schematically illustrated, where e.g. a first pipe (pipe 1) includes at least a part of the token structure/mode/algorithm, at least a fractional number of tokens N₁, a share C₁ of the total packet cost Cₜₒₜ, and a timestamp T₁.

A token bucket algorithm, which may also be known as a leaky bucket algorithm, uses a conceptual bucket, which is filled with a certain number of tokens per time unit. The rate at which the bucket accumulates tokens is often called quota, and is often measured in tokens per second. Furthermore, the bucket may only hold a limited number of tokens, after which one or more tokens are discarded. The maximum number of tokens that the bucket can hold at any time is known as the bucket depth. One problem with the prior art token bucket algorithms is that they are based on a single state/mode usage. For the parallel processing algorithm according to the embodiments of the present invention, fractional buckets, fractional numbers of tokens N₁, N₂, ..., Nₙ, shares C₁, C₂, ..., Cₙ of the total packet cost Cₜₒₜ and/or fractional token quotas may be defined as related to the parallel packet flows.

In other words, when enough numbers of tokens per processing unit PU have been accumulated during serial algorithm Aₛₑᵣ packet processing, e.g. when a total number of tokens Ntot is higher than a parallel processing threshold value N_{tot_par}; Nₜₒₜ > N_{tot_par}; the traffic shaping may transit/switch from the serial mode/algorithm Aₛₑᵣ processing to the parallel mode/algorithm Aₚₐᵣ processing, as is described in detail below. According to the parallel mode/algorithm Aₚₐᵣ, as mentioned above, the single bucket may be partitioned into multiple, at least two, equal-sized per-PU buckets. Each per-PU bucket may start initially with e.g. an equal share of the total number of tokens Ntot, i.e. the fractional numbers of tokens N₁, N₂, ..., Nₙ are granted an equal share of the quota (the token increment rate), and with a bucket depth. Since each processing unit PU may have a private per-PU bucket, the parallel mode may be free to update the private buckets without synchronization. Thus, each per-PU bucket may be given only a fraction of the quota, and each per-PU bucket may be of equal depth. Also, the sum of all tokens in the per-PU buckets may be equal to the tokens in the single bucket, i.e. may be equal to the total number of tokens Ntot, that is used by the serial mode/algorithm Aₛₑᵣ processing. As mentioned above, if e.g. one or more of the per-PU buckets run out of its share of tokens, i.e. its fractional number of tokens N₁, N₂, ...Nₙ, the traffic shaping may transition/switch back to the serial mode/algorithm Aₛₑᵣ processing.

Figure 2b illustrate an embodiment of the method 200 of the present invention, related to the switch 220 of the packet processing from the parallel algorithm Aₚₐᵣ to the serial algorithm Aₛₑᵣ or to a drop mode algorithm A_{drop}.

In a first step 221 of the switch 220, all of the fractional numbers of tokens N₁, N₂, ..., Nₙ are summed/added/accumulated to an accumulated total number of tokens Ntot; Ntot = N₁ + N₂ + ...+ Nₙ.

In a second step 222 of the switch 220, all shares C₁, C₂, ..., Cₙ of the cost are summed/added/accumulated to an accumulated total cost Cₜₒₜ.

In a third step 223 of the switch 220, the total number of tokens Nₜₒₜ and/or the total cost Cₜₒₜ are used when the switch 220 to processing according to the serial packet processing algorithm Aₛₑᵣ is done/effected and/or when switching to processing according to a drop mode algorithm A_{drop} is done/effected.

Thus, according to an embodiment of the present invention, it may be guaranteed that a packet cost cannot slip through during the transition/switch from the parallel mode/algorithm Aₚₐᵣ processing to the serial mode/algorithm Aₛₑᵣ processing. Since the total sum of tokens Nₜₒₜ is preserved, it is impossible for the processing units to forward a higher packet cost than a cost corresponding to the configured rate as a whole.

This may be seen as it is the responsibility of the functionality, e.g. the programming code, executing/performing the switch from parallel mode Aₚₐᵣ to the serial mode Aₛₑᵣ processing, to ensure that no stray packets are still being processed according to the parallel mode/algorithm Aₚₐᵣ, when the first packet is being processed by the synchronized serial mode/algorithm Aₛₑᵣ.

One solution to this problem is, according to an embodiment, to use a "run to completion" concept while processing packets using parallel mode/algorithm Aₚₐᵣ, and assuring that a certain time, the certain time being longer than a maximum time it takes to process a single packet in the parallel mode Aₚₐᵣ, has elapsed since the parallel mode processing was ended until packet processing according to the serial mode/algorithm Aₛₑᵣ begins. For an optimized functionality/programming code, the certain time is typically very short. However, implementations of embodiment are not restricted to using this solution.

When the fractional per-PU numbers of tokens N₁, N₂, ...; Nₙ are summed up in the serial mode/algorithm Aₛₑᵣ processing, potentially a long time after one or more processing unit processed packets according to the parallel mode/algorithm Aₚₐᵣ, the code/algorithm may take the individual time T₁, T₂, ..., Tₙ into account. The individual time T₁, T₂, ..., Tₙ may be taken into account since each of the fractional per-PU buckets were updated. Hereby, it may be determined when the last packet was processed, with or without synchronization. This allows the code/algorithm to sum all accumulated tokens Ntot and to compensate for how frequently packets are processed by the corresponding processing unit.

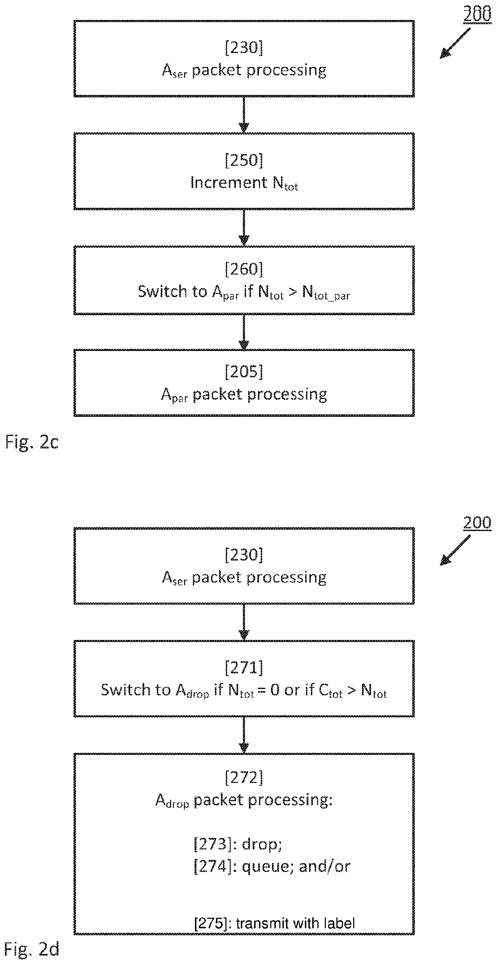

Fig 2c illustrates an embodiment of the present invention.

In a first step 230, the synchronized serial packet processing algorithm Aₛₑᵣ is utilized. The serial packet processing algorithm/mode Aₛₑᵣ may for example correspond to a token bucket algorithm.

In a second step 250, a total number of tokens Ntot is incremented faster over time than tokens are spent by the serial packet processing algorithm Aₛₑᵣ. This has an effect of an increase over time of the total number of tokens Ntot, since the number of tokens are incremented faster than tokens are subtracted from the bucket due to the packet processing.

In a third step 260, the packet processing switches from processing according to the serial packet processing algorithm Aₛₑᵣ to processing according to the parallel packet processing algorithm Aₚₐᵣ when the total number of tokens Nₜₒₜ is higher than a parallel processing threshold value N_{tot_par}; Ntot > N_{tot_par}.

In a fourth step 205, the at least partly unsynchronized parallel processing algorithm Aₚₐᵣ is used for to processing the packets.

Generally, for the token bucket algorithm, a bucket is filled with tokens. The number of tokens to fill the bucket with may be calculated for each incoming packet, based on the time since the last packet was processed by the processing unit. This gives a high accuracy at the expense of performance, wherefore most implementations instead add tokens at regular intervals provided by a timer. The serial mode Aₛₑᵣ offers an at least partly synchronized usage of the processing units, and is essentially unable to benefit from multiple processing units, since only one processing unit can process the packets in the serial mode/algorithm Aₛₑᵣ at a given time. Thus, the packets are processed one by one in a synchronized manner by the processing units. In order for a packet to be processed by a processing unit, there must be at least one token left in the bucket for that processing unit. For each packet that is processed and sent further, the token cost of the packet is subtracted from the bucket.

Figure 2d illustrates an embodiment of the method 200 according to the present invention.

In a first step 230, packets are processed using the at least partly synchronized serial packet processing algorithm Aₛₑᵣ.

In a second step 271, the packet processing is switched from the synchronized serial packet processing algorithm Aₛₑᵣ to a drop mode algorithm A_{drop} if the total number of tokens Ntot has a value of zero (0); Nₜₒₜ = 0; and/or if the total cost Cₜₒₜ exceeds a total number of tokens Ntot; Cₜₒₜ > Nₜₒₜ.

In a third step 272, the packets are processed according to the drop mode algorithm A_{drop}, which may e.g. include dropping 273 at least one packet, queueing 274 at least one packet and/or transmitting 275 at least one packet labelled as being non-conformant.

For example, if there are too few tokens left, e.g. if there are zero tokens, in the bucket, the packets may e.g. be put into a FIFO (First In First Out) queue and wait for tokens to accumulate.

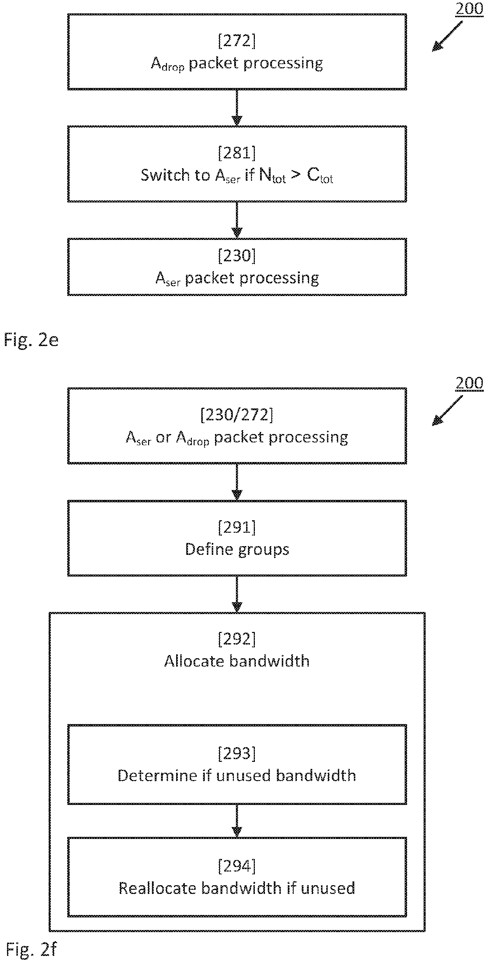

Figure 2e illustrates an embodiment of the method 200 according to the present invention.

In a first step 272, packets are processed according to the drop mode algorithm A_{drop}.

In a second step, 281, the packet processing switches from processing according to the drop mode algorithm A_{drop} to processing according to the serial packet processing algorithm Aₛₑᵣ if a total number of tokens Ntot exceeds the total cost Cₜₒₜ; Nₜₒₜ > Cₜₒₜ.

In a third step, 230, the packets are processed according to the serial mode algorithm Aₛₑᵣ.

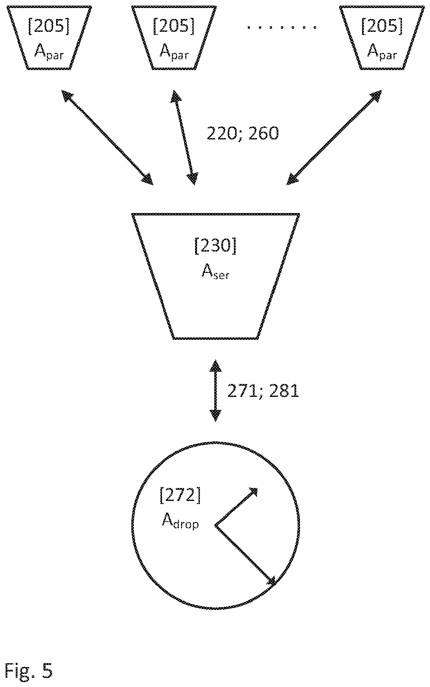

The embodiments described above, including packet processing according to the parallel packet processing algorithm Aₚₐᵣ; 205, packet processing according to the serial packet processing algorithm Aₛₑᵣ; 230, packet processing according to the drop mode algorithm A_{drop}; 272, and switches 220, 260, 271, 281 between these processing algorithms, are schematically and generally illustrated in figure 5.

According to the drop mode/state/algorithm A_{drop}, packets to be processed are dropped, queued and/or transmitted with a label. For each packet that is to be processed, it is calculated how many tokens that have been accumulated in the bucket, but the calculation is only made to see when enough tokens have been accumulated to exit the drop mode, i.e. if a total number of tokens Ntot exceeds the total cost Cₜₒₜ; Nₜₒₜ > Cₜₒₜ. Essentially, this may for example be seen as the time it takes to get Nₜₒₜ > Cₜₒₜ, e.g. more than zero tokens, in the bucket is measured/estimated, and the packet queue/algorithm is not updated while processing according to the drop mode/algorithm A_{drop}, i.e. until a total number of tokens Nₜₒₜ exceeds the total cost Cₜₒₜ; Nₜₒₜ > Cₜₒₜ.

Since the drop mode/algorithm A_{drop} does not make any updates, the set S_{PU} 150 of processing units may execute in full parallelism and without synchronization. As soon as the total number of tokens Nₜₒₜ exceeds the total cost Cₜₒₜ; Nₜₒₜ > Cₜₒₜ, the traffic shaping will exit 281 processing according to the drop mode/algorithm A_{drop} and instead enter processing according to the serial mode/algorithm Aₛₑᵣ again.

The transition 281 from packet processing according to the drop A_{drop} to according to the serial Aₛₑᵣ mode/algorithm is potentially full of races/competition that may possibly allow packets to leak through. It should, however be noted that processing according to the drop mode/algorithm A_{drop} is an event that typically happens on a much less frequent scale than packet processing according e.g. to the serial Aₛₑᵣ or parallel Aₚₐᵣ algorithms, wherefore the complexity and cost of this transition 281 is not critical for the total performance of the traffic shaping. Also, the transition/switch 281 from processing according to the drop mode/algorithm A_{drop} to processing according to the serial mode/algorithm Aₛₑᵣ becomes even less frequent as the work load/total packet processing increases.

There is no synchronization of the processing units at all for packet processing according to the drop mode/algorithm A_{drop}. Also, packet processing according to the drop mode/algorithm A_{drop} is performed in parallel. There are thus some common features for the drop mode/algorithm A_{drop} processing and for the parallel mode/algorithm Aₚₐᵣ processing. However, the parallel mode/algorithm Aₚₐᵣ is limited by an upper limit, but the drop mode/algorithm A_{drop} is limited by a lower limit, where both of these limits are actually the same limit and are related to a configured packet traffic rate to which the traffic should be limited.

When switching 281 from the drop mode /algorithm A_{drop} to the serial mode/algorithm Aₛₑᵣ, there is a possibility that more than one of the processing units S_{PU} 150 try to initiate the switch 281 more or less simultaneously. This potential problem then thus has to be handled.

Thus, since the drop mode/algorithm A_{drop} processing is completely unsynchronized, at certain loads, there is a high likelihood that there are multiple interleaving attempts both to enter and exit drop mode/algorithm A_{drop} processing at the same time. It is, according to an embodiment of the present invention, the responsibility of the exit code/method steps to make sure that one single (only one) processing unit PU will successfully end the drop mode/algorithm A_{drop} processing, which also guarantees that all attempts to enter the drop mode/algorithm A_{drop} processing again will be done/executed/performed after having exited the drop mode/algorithm. This may e.g. be accomplished by use of a multiple-compare-and-swap operation, wherein both a timestamp and the mode/algorithm are atomically verified and updated. Hereby, it is ensured that exactly one processing unit is performing the switch. It is also ensured that, out of multiple possible interleaving attempts to enter and/or exist the drop mode, only the last attempt will succeed.

Other solutions exist to handle the above problems, e.g. by realizing that tokens in the bucket are accumulated with a certain rate. There is thus a certain time requirement in order for one single token to be accumulated. As most implementations of the token bucket algorithm will use integer calculus, selecting a time less than this will amount to zero tokens and multiple simultaneous updates will yield the same result. As an example, the drop mode/algorithm exit may be performed within a critical section, where the one or more PUs of the set S_{PU} 150 are doing uninterrupted work (run-to-completion). The algorithm requires exact timing, wherefore the PUs should not be disturbed by interruptions, such as e.g. CPU migration, context switches or similar.

There is a timestamp T_{d} defined, which may be included in one or more of the herein described individual times T1, T₂, ..., Tₙ, or may be included in another time parameter, which indicates the time passed from when processing according to the drop mode A_{drop} started, e.g. from when the packet processing is switched 271 from the serial mode/algorithm Aₛₑᵣ to the drop mode/algorithm A_{drop}.

The PUs verify that the one or more timestamps T_{d}, the number of tokens in the bucket, the debts and/or the mode/algorithm have not been modified in the interim. It does so by comparing the original number of tokens and/or debts and associated one or more timestamps T_{d} from the beginning, with the current values. Thus, for example, it may here be checked that the one or more timestamps T_{d} have not been changed/altered. If at least one timestamp T_{d} has been changed/altered, this is an indication of that the processing unit checking the time stamp T_{d} is not the processing unit first having initialized the switch, and the run-to-completion work/processing is ended and processing according to the drop mode/algorithm A_{drop} is continued for the processing unit. However, if the one or more timestamps T_{d} are unchanged/unaltered, e.g. the number of tokens are relevant and should be checked, wherefore the run-to-completion work/processing continues with a compare and set (CAS) update of the mode/algorithm to the serial mode/algorithm Aₛₑᵣ. Since the CAS update is used for the mode/algorithm switch, only one processing unit will be successful with the update/switch. This successful processing unit will then also update the time stamp T_{d}. Thereafter, packet processing according to the synchronized serial mode/algorithm Aₛₑᵣ is used. Hereafter, the run-to-completion work/processing is ended, regardless of if the CAS update is successful or not for the processing unit.

According to an embodiment of the present invention, the at least partly unsynchronized parallel packet processing algorithm Aₚₐᵣ further includes prioritized processing. The prioritized processing is then based on priority levels P_{high}; P_{low} related to the at least one processing unit PU₁, PU₂,..., PUₙ of the set S_{PU}; 150. The priority levels may e.g. be assigned to the packets to be processed. For example, one packet may have been assigned a higher priority level P_{high}. A processing unit PU_{high} processing that higher priority packet is then therefore also assigned/related to that higher priority level P_{high} when that higher priority packet is processed by the processing unit PU. Correspondingly, when the same processing unit PU at another point in time processes a packet assigned a lower priority level P_{low}, the processing unit PU_{low} is then assigned/related to that lower priority level P_{low} assigned to that packet.

When the prioritized processing is performed, a processing unit PU_{high} assigned/related to a higher priority P_{high} is allowed to process packets and to charge/debit a fractional debt D_{1_frac}, D_{2_frac}, ..., D_{n_frac} corresponding to the processing of those packets to one or more processing unit PU_{low} of the set S_{PU}; 150 assigned/related to a lower priority P_{low}.

Thus, higher priority level packets are allowed to be processed by at least one processing unit PU_{high} temporarily assigned a higher priority, and the fractional cost for that processing is debited one or more processing unit PU_{low} assigned a lower priority level Plow.

When prioritized processing is used, the shares C₁, C₂, ..., Cₙ of the total packet cost Ctot for the at least one processing unit PU₁, PU₂,..., PUₙ; 151, 152, ..., 15n, respectively, include both fractional packet costs C_{1_frac}, C_{2_frac},..., C_{n_frac} for packets to be processed and also fractional debts D₁__{frac}, D_{2_frac}, ..., D_{n_frac} for processing of packets having a higher priority level P_{high}, wherein the debts are created by another higher priority processing unit PU_{high}; C1 = C_{1_frac} + D_{1_frac}, C2 = C_{2_frac} + D_{2_frac}, ..., Cₙ = C_{n_frac} + D_{n_frac}. It should be noted that packets are not, according to the embodiments of the present invention, divided when being processed, each packet is processed as a whole by one processing unit PU. This also means that the processing cost for each single packet is carried by one processing unit alone. However, the total number of packets to be processed are divided/spread over the set 150 of processing units PU₁, PU₂,..., PUₙ; 151, 152, ..., 15n, such that each processing unit PU₁, PU₂,..., PUₙ; 151, 152, ..., 15n processes one or more whole packets. Correspondingly, also the fractional debts D_{1_frac}, D_{2_frac}, ..., D_{n_frac} are related to processing of whole/entire packets.

The fractional debts D_{1_frac}, D_{2_frac}, ..., D_{n_frac} are decremented over time, e.g. to a minimum value of zero, when processing according to the parallel packet processing algorithm Aₚₐᵣ is used. Generally, fractional debts D_{1_frac}, D_{2_frac}, ..., D_{n_frac} are decremented over time with a rate corresponding to the quota with which the number of (fractional) tokens are incremented over time, even if there are no packets to process.

The above mentioned rules for when to switch between different processing modes/algorithms often compares the total costs Ctot and/or the shares of the costs C₁, C₂, ..., Cₙ with thresholds or other values in order to make a switch of mode/algorithm decision. For the prioritized processing, the shares C₁, C₂, ..., Cₙ include both the fractional packet costs C_{1_frac}, C_{2_frac},..., C_{n_frac} for packets to be processed and also the possible fractional debts D_{1_frac}, D_{2_frac}, ..., D_{n_frac}. Hereby, also the debts are considered, i.e. are taken into consideration, when the switching decisions are made. Correspondingly, the total cost Ctot includes the total debt Dtot for all the prioritized packets. Therefore, for example switching 260 from processing according to the serial packet processing algorithm Aₛₑᵣ to the processing according to the parallel packet processing algorithm Aₚₐᵣ should be decided when the total number of tokens Nₜₒₜ is higher than a parallel processing threshold value N_{tot_par}; Nₜₒₜ > N_{tot_par}; where the parallel processing threshold value N_{tot_par} is increased with a value N_{debt_sum} corresponding to a total debt Dₜₒₜ. This may also be seen as the parallel processing threshold value N_{tot_par} is decreased with the value N_{debt_sum} corresponding to a total debt Dₜₒₜ.

Figure 4 schematically illustrates higher priority level P_{high} packets being allowed to be processed by at least one processing unit PU_{high} temporarily assigned a higher priority P_{high}, and the fractional packet cost C_{2_frac} for that processing being debited D_{2_frac} one or more cost shares C₂ related to a processing unit PU_{low} assigned a lower priority level P_{low}.

Generally, as long as the network node 100 has enough resources to handle/process every single packet with the shortest possible latency, there is no point in traffic priority. To prioritize traffic is only advantageous when the traffic, i.e. the number of packets to process, exceeds the processing capacity of the network node 100. This corresponds to that a total processing cost Ctot for processing the packets exceeds a total cost limit C_{tot_lim}; Cₜₒₜ > C_{tot_lim}. In that situation, i.e. when the processing capacity is exceeded, it is essentially only possible to decrease traffic forwarding/processing. Prioritized processing according to the embodiment is therefore a method for decreasing, in a controlled manner, low-priority traffic just enough so that the network node 100 can handle the high-priority traffic/processing instead.

Conceptually we can define the total cost limit C_{tot_lim} for the traffic cost in general, and a priority cost limit Cₚᵣᵢₒ__{high_lim} for the high-priority traffic cost. Since the high-priority traffic cost Cₚᵣᵢₒ__{high} is included in a priority cost Cₚᵣᵢₒ, the higher priority packets/traffic will get the first share of the total cost Ctot and the best-effort traffic, i.e. the lower priority packets, may be assigned any leftover costs. Neither the high-priority traffic/packets nor the best-effort traffic/packets may exceed the total cost limit C_{tot_lim}. Therefore, setting the high priority cost limit C_{prio_high_lim} higher than the total cost limit C_{tot_lim} is pointless. Setting high priority cost limit C_{prio_high_lim} lower than the total cost limit C_{tot_lim} means that high-priority packets, whose cost would cause the high priority cost limit C_{prio_high_lim} to be exceeded, will have to be handled/processed differently. Typically, this means that those high-priority packets are demoted/degraded, i.e. are reduced in status/priority, to the best-effort status/level P_{low}.

Keeping track of prioritized traffic to select whether to handle packets as high-priority P_{high} or best-effort P_{low}, can be done with a limiting packet processing, which has been modified to not drop packets when the total cost limit C_{tot_lim} is exceeded. Instead, the packet processing only decides whether the packet should be forwarded/passed on or not. Packets that are forwarded/passed on are within the total cost limit C_{tot_lim}, and packets that are not forwarded/passed on are demoted to best-effort level P_{low}. This is function may be denoted a tracking pipe, or a packet classifier, and in a signalling/security Gateway (SGW) code/algorithm it may be denoted a priority pipe, in contrast to a base pipe.

Generally, a pipe may be defined as a conceptual object including at least a token bucket processing structure for the processing mode/algorithm, at least one timestamp, at least one number of tokens in the bucket (which may be a fractional number of tokens) and/or at least one debt (which may be a fractional debt).

By processing according to the above described embodiments, introducing the concept of a token debt, and fractional debts, it is possible to turn the limiting packet processing into something that can decrease low-priority traffic/packet processing with just the amount required by the high-priority traffic/packet processing. The concept of debt means that a bucket, or a fractional bucket, may conceptually be seen as the bucket being allowed to have less than zero tokens. The more such conceptual negative tokens a bucket has, the longer the limiting processing will stay in the drop mode A_{drop}. Principally, when a high-priority packet is sent, it may also be pretended/assumed that a virtual copy of the high-priority packet was accounted related to the processing units PUs through which the low-priority packets are flowing, i.e. the fractional debt corresponding to the high priority packet is taken on by a lower priority traffic/packet processing unit. A virtual copy of the packet may be used, according to an embodiment, since the cost of the high-performance/priority packet is only actually charged/debited the low-priority processing unit, causing the high-priority packet to use up/eat bandwidth for the low-priority traffic/packet processing.

One possible problem with prioritized processing is that the high-priority traffic/packets should not have to wait for synchronization with the processing of the low-priority packets. Therefore, the debts are, according to an embodiment, represented as a per-PU variable, i.e. as the above described fractional debts D_{1_frac}, D_{2_frac}, ..., D_{n_frac}. Technically, the fractional debts D_{1_frac}, D_{2_frac}, ..., D_{n_frac} could use the same per-CPU bucket, i.e. the same fractional bucket, as used by the parallel mode/algorithm Aₚₐᵣ packet processing, since the parallel mode/algorithm Aₚₐᵣ may be updated in parallel anyway. In a practical implementation, however, this has been found to introduce race-conditions and anomalies when the packet processing is rapidly switched between modes/algorithms. Therefore, a separate per-PU parameter is, according to embodiments of the present invention, used for controlling the debts, i.e. the fractional debts D_{1_frac}, D_{2_frac}, ..., D_{n_frac}, which allows for completely unsynchronized addition of the fractional debts D_{1_frac}, D_{2_frac}, ..., D_{n_frac}.

Additionally, the outstanding debt, i.e. the total debt Dtot that the packet processing algorithm has not yet acknowledged, may be defined as the total sum of all per-PU debts, i.e. the sum of the fractional debts D_{1_frac}, D_{2_frac}, ..., D_{n_frac}, minus the last known debt. This allows the packet processing algorithm to reset the outstanding total debt Dtot after having handling it, even with ongoing simultaneous updates of the per-PU debt, i.e. of the fractional debts D_{1_frac}, D_{2_frac}, ..., D_{n_frac}.

Thus, the summation of the total outstanding debt Dtot is a relatively expensive operation, wherefore it is only done when necessary. If one such necessary event is missed, the total outstanding debt Dtot remains as it is until later events happen. It appears that this allows the packet processing code/algorithm to be a bit flexible when it comes to decisions about when to sum up the outstanding debt, wherefore it may be advantageous to do this a little bit too seldom than too often. The end result is the same.

For example, in order to handle packet processing utilizing multiple priority levels P_{high}, P_{low}, the priority pipe may set up a sequence of multiple limiting/prioritizing pipes with support for utilization of the debt concept. These pipes may e.g. be denoted base pipes. All such base pipes may then be configured with the same quota and bucket depth, e.g. related to the total cost limit Cₜₒₜ of the whole prioritizing pipe. As a non-limiting example, traffic/packets classified as best-effort, i.e. as low priority P_{low} packets, may e.g. be sent via a best effort base-pipe. Traffic/packets classified as highest priority may e.g. be sent via a highest priority base-pipe. If a packet is dropped, nothing more happens. However, assuming that highest priority base-pipe says/states/indicates that the packet is conformed to the pipe cost limit, the cost of the packet that already has been sent may also be applied to all base-pipes with a lower priority, down to the best-effort/low priority P_{low} pipe. The effect is that higher priority level P_{high} packets will eat/use up bandwidth for all lower priority levels P_{low} packets. It should be noted that there may be two or more defined priority levels, i.e. there may be one or more defined priority levels between the best effort priority and the highest priority level.

Figure 2f illustrates a method 200 according to an embodiment of the present invention.

In a first step 230/272, packets are processed using the above described serial packet processing algorithm Aₛₑᵣ and/or the above described drop mode algorithm A_{drop}.

In a second step 291, a set of at least one active group G₁, G₂,...G_{K} is defined, wherein each group is related to one or more devices receiving packets via the network node 100.

In a third step 292, at least one bandwidth portion of an available bandwidth, e.g. of the network 500 and/or of the network node 100, is allocated for the at least one active group G₁, G₂,...G_{K} of the set, respectively. This allocation 292 is performed in parallel and at least partly unsynchronized for the at least one active group G₁, G₂,...G_{K}.

According to an embodiment, the at least one bandwidth portion is allocated 292 such that the available bandwidth is essentially equally divided between the at least one group G₁, G₂,...G_{K}.

According to an embodiment of the present invention, the third step 292 of the method may include a fourth step 293, in which it is determined if one or more bandwidth portions of the at least one group G₁, G₂,...G_{K} are unused. The third step 292 may also include a fifth step 294, in which the one or more unused bandwidth portions are reallocated to one or more other of the at least one group G₁, G₂,...G_{K} being in need of more bandwidth. According to an embodiment, the one or more groups G₁, G₂,...G_{K} being in need of more bandwidth compete with each other for the one or more bandwidth portions being reallocated 294.

According to an embodiment of the present invention, the at least one client group G₁, G₂,...G_{K} is related to non-overlapping/separate one or more subsets S₁, S₂, ..., Sₖ of the network traffic. The traffic may here be partitioned into the one or more subsets S₁, S₂, ..., Sₖ by a suitable rule/definition decided e.g. by a network administrator. The one or more subsets S₁, S₂, ..., Sₖ may e.g. be defined such that:
- each client group group G₁, G₂,...G_{K} corresponds/includes the network traffic from a given IP address or network range;
- each client group G₁, G₂,...G_{K} corresponds/includes the network traffic to a given IP address or network range;
- each group G₁, G₂,...G_{K} corresponds/includes the network traffic related to higher layer data, such as a verified user and/or the type of data being transmitted.

This may also be described as the at least one client group G₁, G₂,...G_{K} being related to one or more in the group of:
- at least one source internet protocol (IP) address;
- at least one destination internet protocol (IP) address;
- at least one source network;
- at least one destination network;
- at least one source port;
- at least one destination port;
- at least one receiving interface;
- at least one forwarding interface;
- at least one parameter related to application layer data; and
- at least one partition of network traffic.

Grouping may be seen as essentially processing in form of a set of dynamic pipes/packet processing flows. Each group G₁, G₂,...G_{K} may allocate a set of group counters/parameters, that will keep track of the per-group limits and shares. The groups G₁, G₂,...G_{K} are allocated if they are needed, and are set free (not more allocated) when a time period t_{inactive} of inactivity exceeds a threshold value t_{inactive} > t_{inactive_th}. Fair sharing may be applied between the groups G₁, G₂,...G_{K}, such that every active group G₁, G₂,...G_{K} is guaranteed an equal share of the limits/allocations. The groups G₁, G₂,...G_{K} are not restricted to this guarantee, however, if not all groups G₁, G₂,...G_{K} use their whole guaranteed share at the whole time, other groups can compete for the unused tokens/fractional tokens. Usually, there is no fair sharing of the unused tokens/fractional tokens, although it is possible to get a higher degree fair sharing if the groups are given a weighted share of the whole pipe/processing limit Ctot.

Thus, one basic principle of this embodiment of the present invention is to count the fair share of a given whole/total pipe/processing limit Ctot. This may be done per group G₁, G₂,...G_{K}, and may then be regarded as a clearance over the corresponding whole/total pipe/processing limit Ctot. As long as there are enough tokens in the group share, the packet will pass and will be forwarded, and the fractional cost is debited to the whole pipe/processing limit Cₜₒₜ. It should be noted that the sum of all group shares will never exceed the corresponding whole pipe/processing limit Cₜₒₜ, wherefore this will never cause the whole pipe/processing counter to underflow. Unlike the whole pipe/processing counters, packets are not dropped or demoted when the group share counter has exceeded its per-group limit. Instead, the packet is passed through the whole pipe/processing counter, and any excess of the per group limit is then handled correspondingly as in the case that there is no grouping used.

According to a second aspect of the present invention, a network node 100 as illustrated in figure 1 is presented. The network node includes a processing device 120 arranged for performing the embodiments of the method of the invention.

According to an embodiment, the processing device 120 is arranged for processing packets to be transmitted in the network 500 according to at least:
- a serial packet processing algorithm Aₛₑᵣ providing a synchronized utilization of a set S_{PU}; 150 of at least one processing unit PU₁, PU₂, ..., PUₙ; 151, 152, ..., 15n; and
- a parallel packet processing algorithm Aₚₐᵣ providing an at least partly unsynchronized utilization of the set S_{PU}; 150 of at least one processing unit PU₁, PU₂,..., PUₙ; 151, 152, ..., 15n.

The processing device 120 is further arranged for sharing a total packet cost Ctot corresponding to the processing of the packets such that it is cooperatively shared by the at least one processing unit PU₁, PU₂, ... PUₙ; 151, 152, ..., 15n of the set S_{PU}; 150.

Also, the processing device 120 is arranged for:
- determining 210, when the processing according to the parallel packet processing algorithm Aₚₐᵣ is used for processing said packets, if shares C₁, C₂, ..., Cₙ of the total packet cost Ctot for one or more of the at least one processing units PU₁, PU₂,..., PUₙ; 151, 152, ..., 15n exceed a capacity to process packets for the at least one processing units PU₁, PU₂,..., PUₙ; 151, 152, ..., 15n, respectively, wherein each one of the shares C₁, C₂, ..., Cₙ corresponds to one or more packet; and
- switching 220 from the processing according to the parallel packet processing algorithm Aₚₐᵣ to processing according to the serial packet processing algorithm Aₛₑᵣ if said shares C₁, C₂, ..., Cₙ of said total packet cost Cₜₒₜ for one or more of the at least one processing units PU₁, PU₂,..., PUₙ; 151, 152, ..., 15n, respectively, is determined 210 to exceed the capacity.

This may also be described as the network node 100 and/or the processing device 120 includes a determining unit 121 arranged for performing the above described determination 210, and a switching unit 122 arranged for performing the above described switching 122.

The network node 100, and the processing device 120, may be arranged for implementing any of the herein described embodiments of present invention, and may therefore be provided with corresponding units implementing those embodiments.

Furthermore, any methods according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

The processing device 120 described herein may in an embodiment comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A method (200) for traffic shaping of a packet switched network (500), the method (200) including processing of packets to be transmitted in said network (500) **characterised by**:
a serial packet processing algorithm (Aₛₑᵣ) providing a synchronized utilization of a set (S_{PU}; 150) of at least two processing units (PU₁, PU₂, ..., PUₙ; 151, 152, ..., 15n), wherein only one of said at least two processing units (PU₁; PU₂; ..., PUₙ; 151; 152; ...; 15n) processes the packets at a given time and the packets are processed one by one in a synchronized manner; and
- a parallel packet processing algorithm (Aₚₐᵣ) providing an at least partly unsynchronized utilization of said set (S_{PU}; 150) of said at least two processing units (PU₁, PU₂,..., PUₙ; 151, 152, ..., 15n), wherein said at least two processing units (PU₁, PU₂, ..., PUₙ; 151, 152, ..., 15n) process the packets in parallel in an at least partly unsynchronized manner; wherein
- said processing of said packets corresponds to a total packet cost (Cₜₒₜ), which is cooperatively shared by said at least two processing units (PU₁, PU₂, ... PUn; 151, 152, ..., 15n) of said set (S_{PU}; 150);
- determining (210), when said processing according to said parallel packet processing algorithm (Aₚₐᵣ) is used for processing said packets, if shares (C₁, C₂, ..., Cₙ) of said total packet cost (Cₜₒₜ) for one or more of said at least two processing units (PU₁, PU₂,..., PUₙ; 151, 152, ..., 15n) exceed a capacity to process packets for said at least two processing units (PU₁, PU₂,..., PUₙ; 151, 152, ..., 15n), respectively, wherein each one of the shares (C₁, C₂, ..., Cₙ) corresponds to one or more packets; and
- switching (220) from said processing according to said parallel packet processing algorithm (Aₚₐᵣ) to processing according to said serial packet processing algorithm (Aₛₑᵣ) if said shares (C₁, C₂, ..., Cₙ) of said total packet cost (Cₜₒₜ) for one or more of said at least two processing units (PU₁, PU₂,..., PUₙ; 151, 152, ..., 15n), respectively, is determined (210) to exceed said capacity .

2. The method (200) as claimed in claim 1, wherein said at least partly unsynchronized parallel packet processing algorithm (Aₚₐᵣ) further includes:
- prioritizing processing based on priority levels (P_{high}; P_{low}) related to said at least two processing units (PU₁, PU₂,..., PUₙ; 151, 152, ..., 15n) of said set (S_{PU}; 150), whereby:
- a processing unit (PU_{high}) related to a higher priority (P_{high}) is allowed to process packets and to charge a fractional debt (D_{1_frac}, D_{2_frac}, ..., D_{n_frac}) corresponding to the processing of said packets to one or more processing unit (PU_{low}) of said set (S_{PU}; 150) related to a lower priority (P_{low}); and
- said shares (C₁, C₂, ..., Cₙ) of said total packet cost (Cₜₒₜ) for said at least two processing units (PU₁, PU₂,..., PUₙ; 151, 152, ..., 15n), respectively, include both fractional packet costs (C_{1_frac}, C_{2_frac},..., C_{n_frac}) and fractional debts (D_{1_frac}, D_{2_frac}, ..., D_{n_frac}; C₁ = C_{1_frac} + D_{1_frac}, C₂ = C_{2_frac} + D_{2_frac}, ..., Cₙ = C_{n_frac} + D_{n_frac}).

3. The method (200) as claimed in any one of claims 1-2, wherein
- an at least partly unsynchronized processing unit (PU₁, PU₂,..., PUₙ; 151, 152, ..., 15n), which processes packets according to said parallel packet processing algorithm (Aₚₐᵣ) and for which said share (C₁, C₂, ..., Cₙ) of said total packet cost (Cₜₒₜ) exceeds its capacity to process packets, is incapable to determine if said set (S_{PU}; 150) of at least two processing units (PU₁, PU₂,..., PUₙ; 151, 152, ..., 15n) as a whole is able to process said packets; and
- said at least partly unsynchronized processing unit (PU₁, PU₂,..., PUₙ; 151, 152, ..., 15n) requests for said switch to said processing according to said serial packet processing algorithm Aₛₑᵣ as a result of its incapability to determine if said set (S_{PU}; 150) of at least two processing units (PU₁, PU₂,..., PUₙ; 151, 152, ..., 15n) as a whole is able to process said packets.

4. The method (200) as claimed in any one of claims 1-3, wherein:
- said parallel packet processing algorithm (Aₚₐᵣ) is an at least partly unsynchronized token bucket algorithm;
- said total packet cost (Ctot) is related to a total number of tokens (Nₜₒₜ);
- said total number of tokens (Nₜₒₜ) is portioned over said set (S_{PU}; 150) as fractional numbers of tokens (N₁, N₂, ..., Nₙ) for said at least partly unsynchronized at least two processing units (PU₁, PU₂,..., PUₙ; 151, 152, ..., 15n), respectively
- said shares (C₁, C₂, ..., Cₙ) of said total packet cost (Cₜₒₜ) are related to said fractional numbers of tokens (N₁, N₂, ..., Nₙ), respectively.

5. The method (200) as claimed in claim 4, further including:
- summing up (221) all of said fractional numbers of tokens (N₁, N₂, ..., Nₙ) to said total number of tokens (Nₜₒₜ; Nₜₒₜ = N₁ + N₂ + ...+ Nₙ);
- summing up (222) all shares (C₁, C₂, ..., Cₙ) to said total packet cost (Cₜₒₜ); and
- utilizing (223) said total number of tokens (Nₜₒₜ) and/or said total packet cost (Cₜₒₜ) when switching (220) to processing according to said serial packet processing algorithm (Aₛₑᵣ) and/or when switching to processing according to a drop mode algorithm (A_{drop}).

6. The method (200) as claimed in claim 5, wherein said serial packet processing algorithm (Aₛₑᵣ) includes:
- incrementing (250) a total number of tokens (Nₜₒₜ) over time faster than tokens are spent by said serial packet processing algorithm (Aₛₑᵣ); and
- switching (260) from processing according to said serial packet processing algorithm (Aₛₑᵣ) to said processing according to said parallel packet processing algorithm (Aₚₐᵣ) when said total number of tokens (Nₜₒₜ) is higher than a parallel processing threshold value (N_{tot_par}; Nₜₒₜ> N_{tot_par}).

7. The method (200) as claimed in claim 6, wherein said parallel processing threshold value (N_{tot_par}) is increased with a value (N_{debt_sum}) corresponding to a total debt (Dₜₒₜ) when said total packet cost (Cₜₒₜ) includes said total debt (Dₜₒₜ).

8. The method (200) as claimed in any one of claims 4-7, further including:
- switching (271) from processing according to said serial packet processing algorithm (Aₛₑᵣ) to processing according to a drop mode algorithm (A_{drop}); and
- processing (272) said packets according to said drop mode algorithm (A_{drop}) using said set (S_{PU}; 150) of said at least partly unsynchronized at least two processing units (PU₁, PU₂,..., PUₙ; 151, 152, ..., 15n) if at least one is true in the group of:
- said total number of tokens (Nₜₒₜ) has a value of zero (0); (Nₜₒₜ = 0); and
- said total packet cost (Cₜₒₜ) exceeds said total number of tokens (Nₜₒₜ; Cₜₒₜ > Nₜₒₜ).

9. The method (200) as claimed in any one of claims 4-8, further including, if < said total number of tokens (Nₜₒₜ) exceeds said total packet cost (Cₜₒₜ; Nₜₒₜ > Cₜₒₜ):
- switching (281) from processing according to a drop mode algorithm (A_{drop}) to processing according to said serial packet processing algorithm (Aₛₑᵣ); and
- processing (230) said packets according to said serial packet processing algorithm (Aₛₑᵣ).

10. The method (200) as claimed in claim 1-9, further including:
- defining (291) a set of at least one active group (G₁, G₂,...G_{K}), each group being related to one or more devices receiving packets via a network node (100); and
- allocating (292) at least one bandwidth portion of an available bandwidth in said network (500) for said at least one active group (G₁, G₂,...K_{K}) of said set, respectively, wherein said allocating (292) is performed in parallel and at least partly unsynchronized for said at least one active group (G₁, G₂,...G_{K}).

11. The method (200) as claimed in claim 10, wherein said allocating (292) of said at least one bandwidth portion is performed such that the available bandwidth is equally divided between the at least one group (G₁, G₂,...G_{K}).

12. The method (200) as claimed in any one of claims 10-11, wherein said allocating (292) of said at least one bandwidth portion further includes:
- determining (293) if one or more bandwidth portions of the at least one group (G₁, G₂,...G_{K}) is unused; and
- reallocating (294) said one or more unused bandwidth portions to one or more other groups of said at least one group (G₁, G₂,...G_{K}) being in need of more bandwidth.

13. The method (200) as claimed in claim 12, wherein said one or more groups (G₁, G₂,...G_{K}) being in need of more bandwidth compete with each other for the one or more bandwidth portions being reallocated.

14. A computer program with a program code for performing a method according to any one of claims 1-13 when the computer program runs on a computer.

15. A network node (100) of a packet switched network, the network node (100) including a processing device (120) arranged for processing packets to be transmitted in said network (500) **characterised by** the processing device (120) being arranged to perform a serial packet processing algorithm (Aₛₑᵣ) and a parallel packet processing algorithm (Aₚₐᵣ) wherein
- the serial packet processing algorithm (Aₛₑᵣ) providing a synchronized utilization of a set (S_{PU}; 150) of at least two processing units (PU₁, PU₂, ..., PUₙ; 151, 152, ..., 15n), wherein only one of said at least two processing units (PU₁; PU₂; ..., PUₙ; 151; 152; ...; 15n) processes the packets at a given time and the packets are processed one by one in a synchronized manner; and
- the parallel packet processing algorithm (Aₚₐᵣ) providing an at least partly unsynchronized utilization of said set (S_{PU}; 150) of said at least two processing units (PU₁, PU₂,..., PUₙ; 151, 152, ..., 15n), wherein said at least two processing units (PU₁, PU₂, ..., PUₙ; 151, 152, ..., 15n) process the packets in parallel in an at least partly unsynchronized manner; wherein
- said processing of said packets corresponds to a total packet cost (Ctot), which is cooperatively shared by said at least two processing units (PU₁, PU₂, ... PUₙ; 151, 152, ..., 15n) of said set (S_{PU}; 150);
said processing device (120) being arranged for:
- determining (210), when said processing according to said parallel packet processing algorithm (Aₚₐᵣ) is used for processing said packets, if shares (C₁, C₂, ..., Cₙ) of said total packet cost (Cₜₒₜ) for one or more of said at least two processing units (PU₁, PU₂,..., PUₙ; 151, 152, ..., 15n) exceed a capacity to process packets for said at least two processing units (PU₁, PU₂,..., PUₙ; 151, 152, ..., 15n), respectively, wherein each one of the shares (C₁, C₂, ..., Cₙ) corresponds to one or more packets; and
- switching (220) from said processing according to said parallel packet processing algorithm (Aₚₐᵣ) to processing according to said serial packet processing algorithm Aₛₑᵣ if said shares (C₁, C₂, ..., Cₙ) of said total packet cost (Cₜₒₜ) for one or more of said at least two processing units (PU₁, PU₂,..., PUₙ; 151, 152, ..., 15n), respectively, is determined (210) to exceed said capacity .

## Patentansprüche

1. Verfahren (200) zum Formen eines Datenverkehrs in einem paketvermittelten Netzwerk (500), wobei das Verfahren (200) ein Verarbeiten von Datenpaketen aufweist, die in dem Netzwerk (500) zu übertragen werden müssen **gekennzeichnet durch**:
- einen seriellen Datenverarbeitungsalgorithmus (Aₛₑᵣ), der eine synchronisierte Nutzung einer Gruppierung (S_{PU}; 150) von mindestens zwei Verarbeitungseinheiten (PU₁, PU₂, ..., PUₙ; 151, 152, ..., 15n) bereitstellt, wobei nur Eine der mindestens zwei Verarbeitungseinheiten (PU₁, PU₂, ..., PUₙ; 151, 152, ..., 15n) die Datenpakete zu einem gegebenen Zeitpunkt verarbeitet und wobei die Datenpakete in einer synchronisierten Weise Eines nach dem Anderen verarbeitet werden; und
- einen parallelen Datenverarbeitungsalgorithmus (Aₚₐᵣ), der eine mindestens teilweise unsynchronisierte Nutzung der Gruppierung (S_{PU}; 150) der mindestens zwei Verarbeitungseinheiten (PU₁, PU₂, ..., PUₙ; 151, 152, ..., 15n) bereitstellt, wobei die mindestens zwei Verarbeitungseinheiten (PU₁, PU₂, . . . , PUₙ; 151, 152, ..., 15n) die Datenpakete parallel in einer mindestens teilweise unsynchronisierten Weise verarbeitet; wobei
- das Verarbeiten der Datenpakete einem gesamten Datenpaketaufwand (Cₜₒₜ) entspricht, der kooperativ von den mindestens zwei Verarbeitungseinheiten (PU₁, PU₂, ..., PUₙ; 151, 152, ..., 15n) der Gruppierung (S_{PU}; 150) gemeinsam getragen wird;
- Ermitteln (210), wenn das Verarbeiten gemäß dem parallelen Datenverarbeitungsalgorithmus (Aₚₐᵣ) für das Verarbeiten der Datenpakete verwendet wird, ob Anteile (C₁, C₂, ..., Cn) des gesamten Datenpaketaufwands (Cₜₒₜ) für eine oder mehrere der mindestens zwei Verarbeitungseinheiten (PU₁, PU₂, ..., PUₙ; 151, 152, ..., 15n) eine jeweilige Kapazität zum Verarbeiten von Datenpaketen für die mindestens zwei Verarbeitungseinheiten (PU₁, PU₂, ..., PUₙ; 151, 152, ..., 15n) überschreiten, wobei jeder der Anteile (C₁, C₂, ..., Cn) einem oder mehreren Datenpaketen entspricht; und
- Umschalten (220) von dem Verarbeiten gemäß dem parallelen Datenverarbeitungsalgorithmus (Aₚₐᵣ) zum Verarbeiten gemäß dem seriellen Datenverarbeitungsalgorithmus (Aₛₑᵣ), wenn für die Anteile (C₁, C₂, ..., Cn) des gesamten Datenpaketaufwands (Cₜₒₜ) für jeweils eine oder mehrere der mindestens zwei Verarbeitungseinheiten (PU₁, PU₂, ..., PUₙ; 151, 152, ..., 15n) ermittelt wird (210), dass die Kapazität überschritten wird.

2. Verfahren (200) nach Anspruch 1, wobei der mindestens teilweise unsynchronisierte Datenverarbeitungsalgorithmus (Aₚₐᵣ) außerdem aufweist:
- Priorisieren des Verarbeitens aufgrund von Prioritätsebenen (P_{high}; P_{low}), die sich auf die mindestens zwei Verarbeitungseinheiten (PU₁, PU₂, ..., PUₙ; 151, 152, ..., 15n) der Gruppierung (S_{PU}; 150) beziehen, wobei:
- einer Verarbeitungseinheit (PU_{high}), die sich auf eine höhere Priorität (P_{high}) bezieht, erlaubt wird, Datenpakete zu verarbeiten und eine oder mehrere Verarbeitungseinheiten (PU_{low}) der Gruppierung (S_{PU}; 150), die sich auf eine niedrigere Priorität (P_{low}) beziehen, mit einer fraktionierten Verpflichtung (D_{1_frac}, D₂__{frac}, ..., Dₙ__{frac}) zu belasten, die dem Verarbeiten der Datenpakete entspricht; und
- die Anteile (C₁, C₂, ..., Cₙ) des gesamten Datenpaketaufwands (Cₜₒₜ) für die mindestens zwei Verarbeitungseinheiten (PU₁, PU₂, ..., PUₙ; 151, 152, ..., 15n) jeweils sowohl fraktionierte Datenpaketaufwände (C_{1_frac}, C₂__{frac}, ..., Cₙ__{frac}) als auch fraktionierte Verpflichtungen (D_{1_frac}, D_{2_frac}, ..., Dn_{_frac}; C₁ = C_{1_frac} + D_{1_frac}, C2 = C₂__{frac} + D₂__{frac}, ..., Cₙ = C_{n_frac} + Dₙ__{frac}) aufweisen.

3. Verfahren (200) nach einem der Ansprüche 1 bis 2, wobei:
- eine mindestens teilweise unsynchronisierte Verarbeitungseinheit (PU₁, PU₂, ..., PUₙ; 151, 152, ..., 15n), welche die Datenpakete gemäß dem parallelen Datenverarbeitungsalgorithmus (Aₚₐᵣ) verarbeitet und für die der Anteil (C₁, C₂, ..., Cₙ) an dem gesamten Datenpaketaufwand (Cₜₒₜ) ihre Kapazität zum Verarbeiten von Datenpaketen überschreitet, nicht in der Lage ist, um zu ermitteln, ob die Gruppierung (S_{PU}; 150) der mindestens zwei Verarbeitungseinheiten(PU₁, PU₂, ..., PUₙ; 151, 152, ..., 15n), als Ganzes in der Lage ist, die Datenpakete zu verarbeiten; und
- die mindestens teilweise unsynchronisierte Verarbeitungseinheit (PU₁, PU₂, ..., PUₙ; 151, 152, ..., 15n) das Umschalten auf das Verarbeiten gemäß dem seriellen Datenverarbeitungsalgorithmus (Aₛₑᵣ) als Ergebnis ihrer eigenen Unfähigkeit zum Ermitteln, ob die Gruppierung (S_{PU}; 150) der mindestens zwei Verarbeitungseinheiten (PU₁, PU₂, ..., PUₙ; 151, 152, ..., 15n), als Ganzes in der Lage ist, die Datenpakete zu verarbeiten, anfordert.

4. Verfahren (200) nach einem der Ansprüche 1 bis 3, wobei:
- der parallele Datenverarbeitungsalgorithmus (Aₚₐᵣ) ein mindestens teilweise unsynchronisierter Token-Bucket-Algorithmus ist;
- der gesamte Datenpaketaufwand (Cₜₒₜ) sich auf eine Gesamtanzahl von Tokens (Nₜₒₜ) bezieht;
- die Gesamtanzahl von Tokens (Nₜₒₜ) über die Gruppierung (S_{PU}; 150) als fraktionierte Anzahl von Tokens (N₁, N₂, ..., Nₙ) für jeweils die mindestens teilweise unsynchronisierten mindestens zwei Verarbeitungseinheiten (PU₁, PU₂, ..., PUₙ; 151, 152, ..., 15n) aufgeteilt wird,
- sich die Anteile (C₁, C₂, ..., Cₙ) des gesamten Datenpaketaufwands (Cₜₒₜ) jeweils auf die fraktionierten Anzahlen von Tokens (N₁, N₂, ..., Nₙ) beziehen.

5. Verfahren (200) nach Anspruch 4, das außerdem aufweist:
- Summieren (221) aller fraktionierten Anzahlen von Tokens (N₁, N₂, ..., Nₙ) zur Gesamtanzahl von Tokens (Nₜₒₜ; Nₜₒₜ = N₁ + N₂ + ... + Nₙ) ;
- Summieren (222) aller Anteile (C₁, C₂, ..., Cₙ) zu dem gesamten Datenpaketaufwand (Ctot); und
- Verwenden (223) der Gesamtanzahl von Tokens (Nₜₒₜ) und/oder den gesamten Datenpaketaufwand (Cₜₒₜ), wenn auf ein Verarbeiten gemäß dem seriellen Datenverarbeitungsalgorithmus (Aₛₑᵣ) umgeschaltet wird (220) und/oder, wenn auf ein Verarbeiten gemäß einem Drop-Modus-Algorithmus (A_{drop}) umgeschaltet wird.

6. Verfahren (200) nach Anspruch 5, wobei der serielle Datenverarbeitungsalgorithmus (Aₛₑᵣ) aufweist:
- Vergrößern (250) einer Gesamtanzahl von Tokens (Nₜₒₜ) über der Zeit schneller als die Tokens von dem seriellen Datenverarbeitungsalgorithmus (Aₛₑᵣ) abgearbeitet werden; und
- Umschalten (260) von dem Verarbeiten gemäß dem seriellen Datenverarbeitungsalgorithmus (Aₛₑᵣ) zu dem Verarbeiten gemäß dem parallelen Datenverarbeitungsalgorithmus (Aₚₐᵣ), wenn die Gesamtanzahl von Tokens (Nₜₒₜ) größer als ein Schwellenwert der parallelen Verarbeitung (N_{tot_par}; Nₜₒₜ > N_{tot_par}) ist.

7. Verfahren (200) nach Anspruch 6, wobei der Schwellenwert der parallelen Verarbeitung (Nₜₒₜ_ₚₐᵣ) mit einem Wert (N_{debt_sum}) vergrößert wird, der einer Gesamtverpflichtung (Dₜₒₜ) entspricht, wenn der gesamte Datenpaketaufwand (Cₜₒₜ) die Gesamtverpflichtung (Dₜₒₜ) enthält.

8. Verfahren (200) nach einem der Ansprüche 4 bis 7, das außerdem aufweist:
- Umschalten (271) von dem Verarbeiten gemäß dem seriellen Datenverarbeitungsalgorithmus (Aₛₑᵣ) zu dem Verarbeiten gemäß einem Drop-Modus-Algorithmus (A_{drop}); und
- Verarbeiten (272) der Datenpakete gemäß dem Drop-Modus-Algorithmus (A_{drop}) mithilfe der Gruppierung (S_{PU}; 150) der mindestens teilweise unsynchronisierten mindestens zwei Verarbeitungseinheiten (PU₁, PU₂, ..., PUₙ; 151, 152, ..., 15n), wenn mindestens Eines gültig ist in der Gruppe bestehend aus:
- der Gesamtanzahl von Tokens (Nₜₒₜ), die einen Wert von Null (0); (Nₜₒₜ = 0) aufweist; und
- des gesamten Datenpaketaufwands (Cₜₒₜ), der die Gesamtanzahl von Tokens (Nₜₒₜ; Cₜₒₜ > Nₜₒₜ) überschreitet.

9. Verfahren (200) nach einem der Ansprüche 4 bis 8, das außerdem aufweist, wenn die Gesamtanzahl von Tokens (Nₜₒₜ) den gesamten Datenpaketaufwand (Cₜₒₜ; Nₜₒₜ > Cₜₒₜ) überschreitet:
- Umschalten (281) von einem Verarbeiten gemäß dem Drop-Modus-Algorithmus (A_{drop}) zu dem Verarbeiten gemäß dem seriellen Datenverarbeitungsalgorithmus (Aₛₑᵣ); und
- Verarbeiten (230) der Datenpakete dem Verarbeiten gemäß dem seriellen Datenverarbeitungsalgorithmus (Aₛₑᵣ).

10. Verfahren (200) nach Anspruch 1 bis 9, das außerdem aufweist:
- Definieren (291) einer Gruppierung aus mindestens einer Gruppe (G₁, G₂, ..., G_{K}), wobei sich jede Gruppe auf einer oder mehrere Vorrichtungen bezieht, die Datenpakete über einen Netzwerkknoten (100) empfängt; und
- Zuteilen (292) mindestens eines Bandbreitenabschnitts einer verfügbaren Bandbreite in dem Netzwerk (500) für die jeweils mindestens eine aktive Gruppe (G₁, G₂, ..., G_{K}) der Gruppierung, wobei das Zuteilen (292) parallel und mindestens teilweise unsynchronisiert für die mindestens eine aktive Gruppe (G₁, G₂, ..., G_{K}) ausgeführt wird.

11. Verfahren (200) nach Anspruch 10, wobei das Zuteilen (292) des mindestens einen Bandbreitenabschnitts so ausgeführt wird, dass die verfügbare Bandbreite gleichmäßig auf die mindestens eine Gruppe (G₁, G₂, ..., G_{K}) aufgeteilt wird.

12. Verfahren (200) nach einem der Ansprüche 10 bis 11, wobei das Zuteilen (292) des mindestens einen Bandbreitenabschnitts außerdem aufweist:
- Ermitteln (293), ob einer oder mehrere Bandbreitenabschnitte der mindestens einen Gruppe (G₁, G₂, ..., G_{K}) unbenutzt ist; und
- Neuzuteilen (294) des einen oder der mehreren unbenutzten Bandbreitenabschnitte zu einer oder mehreren anderen Gruppen der mindestens einen Gruppe (G₁, G₂, ..., G_{K}), die eine größere Bandbreite benötigen.

13. Verfahren (200) nach Anspruch 12, wobei die eine oder mehreren Gruppen (G₁, G₂, ..., G_{K}), die eine größere Bandbreite benötigen, miteinander um den einen oder die mehreren Bandbreitenabschnitte konkurrieren, die neu zugeteilt werden.

14. Computerprogramm mit einem Programmcode für ein Ausführen eines Verfahrens nach einem der Ansprüche 1 bis 13, wenn das Computerprogramm in einem Computer abläuft.

15. Netzwerkknoten (100) eines paketvermittelten Netzwerks, wobei der Netzwerkknoten (100) eine Verarbeitungsvorrichtung (120) aufweist, die geeignet ist zum Verarbeiten von Datenpaketen (500), die in dem Netzwerk übertragen werden müssen, **dadurch gekennzeichnet, dass** die Verarbeitungsvorrichtung (120) geeignet ist zum Ausführen eines seriellen Datenverarbeitungsalgorithmus (Aₛₑᵣ) und eines parallelen Datenverarbeitungsalgorithmus (Aₚₐᵣ), wobei:
- der serielle Datenverarbeitungsalgorithmus (Aₛₑᵣ) eine synchronisierte Nutzung einer Gruppierung (S_{PU}; 150) von mindestens zwei Verarbeitungseinheiten (PU₁, PU₂, ..., PUₙ; 151, 152, ..., 15n) bereitstellt, wobei nur Eine der mindestens zwei Verarbeitungseinheiten (PU₁, PU₂, ..., PUₙ; 151, 152, ..., 15n) die Datenpakete zu einem gegebenen Zeitpunkt verarbeitet und wobei die Datenpakete in einer synchronisierten Weise Eines nach dem Anderen verarbeitet werden; und
- der parallele Datenverarbeitungsalgorithmus (Aₚₐᵣ) eine mindestens teilweise unsynchronisierte Nutzung der Gruppierung ( S_{PU}; 150) der mindestens zwei Verarbeitungseinheiten (PU₁, PU₂, ..., PUₙ; 151, 152, ..., 15n) bereitstellt, wobei die mindestens zwei Verarbeitungseinheiten (PU₁, PU₂, ..., PUₙ; 151, 152, ..., 15n) die Datenpakete parallel in einer mindestens teilweise unsynchronisierten Weise verarbeiten; wobei
- das Verarbeiten der Datenpakete einem gesamten Datenpaketaufwand (Cₜₒₜ) entspricht, der kooperativ von den mindestens zwei Verarbeitungseinheiten (PU₁, PU₂, ..., PUₙ; 151, 152, ..., 15n) der Gruppierung (S_{PU}; 150) gemeinsam getragen wird;
wobei die Verarbeitungsvorrichtung (120) geeignet ist zum:
- Ermitteln (210), wenn das Verarbeiten gemäß dem parallelen Datenverarbeitungsalgorithmus (Aₚₐᵣ) für das Verarbeiten der Datenpakete verwendet wird, ob Anteile (C₁, C₂, ..., Cn) des gesamten Datenpaketaufwands (Cₜₒₜ) für eine oder mehrere der mindestens zwei Verarbeitungseinheiten (PU₁, PU₂, ..., PUₙ; 151, 152, ..., 15n) eine jeweilige Kapazität zum Verarbeiten von Datenpaketen für die mindestens zwei Verarbeitungseinheiten (PU₁, PU₂, ..., PUₙ; 151, 152, ..., 15n) überschreiten, wobei jeder der Anteile (C₁, C₂, ..., Cn) einem oder mehreren Datenpaketen entspricht; und
- Umschalten (220) von dem Verarbeiten gemäß dem parallelen Datenverarbeitungsalgorithmus (Aₚₐᵣ) zum Verarbeiten gemäß dem seriellen Datenverarbeitungsalgorithmus (Aₛₑᵣ), wenn für die Anteile (C₁, C₂, ..., Cₙ) des gesamten Datenpaketaufwands (Cₜₒₜ) für jeweils eine oder mehrere der mindestens zwei Verarbeitungseinheiten (PU₁, PU₂, ..., PUₙ; 151, 152, ..., 15n) ermittelt wird (210), dass die Kapazität überschritten wird.

## Revendications

1. Procédé (200) de mise en forme du trafic d'un réseau à commutation de paquets (500), le procédé (200) comprenant le traitement des paquets à transmettre dans ledit réseau (500) et étant **caractérisé par** les étapes suivantes :
- un algorithme de traitement de paquets en série (Aₛₑᵣ) permettant une utilisation synchronisée d'un ensemble (S_{PU} ; 150) d'au moins deux unités de traitement (PU₁, PU₂, ..., PUₙ ; 151, 152, ..., 15n), où une seule desdites au moins deux unités de traitement (PU₁ ; PU₂ ; ..., PUₙ ; 151 ; 152 ; ... ; 15ₙ) traite les paquets à un moment donné, et les paquets sont traités un par un de manière synchronisée ; et
- un algorithme de traitement de paquets en parallèle (Aₚₐᵣ) permettant une utilisation au moins partiellement non synchronisée dudit ensemble (S_{PU} ; 150) desdites au moins deux unités de traitement (PU₁, PU₂, ..., PUₙ ; 151, 152, ..., 15n), où lesdites au moins deux unités de traitement (PU₁, PU₂, ..., PUₙ ; 151, 152, ..., 15n) traitent les paquets en parallèle d'une manière au moins partiellement non synchronisée ; où
- ledit traitement desdits paquets correspond à un coût total en termes de paquets (Cₜₒₜ), qui est partagé en coopération par lesdites au moins deux unités de traitement (PU₁, PU₂, ..., PUₙ ; 151, 152, ..., 15n) dudit ensemble (S_{PU} ; 150) ;
- déterminer (210), lorsque ledit traitement selon ledit algorithme de traitement de paquets en parallèle (Aₚₐᵣ) est utilisé pour traiter lesdits paquets, si des parts (C₁, C₂, ..., Cₙ) dudit coût total en termes de paquets (Cₜₒₜ) pour une ou plusieurs desdites au moins deux unités de traitement (PU₁, PU₂, ..., PUₙ ; 151, 152, ..., 15n) dépassent une capacité de traitement des paquets pour lesdites au moins deux unités de traitement (PU₁, PU₂, ..., PUₙ ; 151, 152, ..., 15n), respectivement, où chacune des parts (C₁, C₂, ..., Cₙ) correspond à un ou plusieurs paquets ; et
- commuter (220) dudit traitement selon ledit algorithme de traitement de paquets en parallèle (Aₚₐᵣ) au traitement selon ledit algorithme de traitement de paquets en série (Aₛₑᵣ) si lesdites parts (C₁, C₂, ..., Cn) dudit coût total en termes de paquets (Cₜₒₜ) pour une ou plusieurs desdites au moins deux unités de traitement (PU₁, PU₂, ..., PUₙ ; 151, 152, ..., 15n), respectivement, sont déterminées (210) comme dépassant ladite capacité.

2. Procédé (200) tel que revendiqué dans la revendication 1, dans lequel ledit algorithme de traitement de paquets en parallèles au moins partiellement non synchronisé (Aₚₐᵣ) comprend en outre les étapes suivantes :
- prioriser le traitement sur la base de niveaux de priorité (P_{high} ; P_{low}) liés auxdites au moins deux unités de traitement (PU₁, PU₂, ..., PUₙ ; 151, 152, ..., 15n) dudit ensemble (S_{PU} ; 150), moyennant quoi :
- une unité de traitement (PU_{high}) liée à une priorité supérieure (P_{high}) est autorisée à traiter des paquets et à imputer une dette fractionnée (D_{1_frac}, D_{2_frac}, ..., Dₙ__{frac}) correspondant au traitement desdits paquets à une ou plusieurs unités de traitement (PU_{low}) dudit ensemble (S_{PU} ; 150) liées à une priorité inférieure (P_{low}) ; et
- lesdites parts (C₁, C₂, ..., Cₙ) dudit coût total en termes de paquets (Cₜₒₜ) pour lesdites au moins deux unités de traitement (PU₁, PU₂, ..., PUₙ ; 151, 152, ..., 15n), respectivement, comprennent à la fois des coûts de paquets fractionnés (C_{1_ frac}, C_{2_frac}, ..., C_{n_frac}) et des dettes fractionnées (D_{1_frac}, D_{2_frac}, ..., D_{n_frac} ; C₁ = C_{1_frac} + D_{1_frac}, C₂ = C₂__{frac} + D_{2_frac}, ..., Cₙ = C_{n_frac} + D_{n_frac}).

3. Procédé (200) tel que revendiqué dans l'une quelconque des revendications 1 et 2, dans lequel :
- une unité de traitement au moins partiellement non synchronisée (PU₁, PU₂, ..., PUₙ ; 151, 152, ..., 15n), qui traite des paquets selon ledit algorithme de traitement des paquets parallèle (Aₚₐᵣ) et pour laquelle ladite part (C₁, C₂, ..., Cₙ) dudit coût total en termes de paquets (Cₜₒₜ) dépasse sa capacité à traiter les paquets, est incapable de déterminer si ledit ensemble (S_{PU} ; 150) d'au moins deux unités de traitement (PU₁, PU₂, ..., PUₙ ; 151, 152, ..., 15n) en tout est capable de traiter lesdits paquets ; et
- ladite unité de traitement au moins partiellement non synchronisée (PU₁, PU₂, ..., PUₙ ; 151, 152, ..., 15n) demande ladite commutation vers ledit traitement selon ledit algorithme de traitement de paquets en série Aₛₑᵣ en conséquence de son incapacité à déterminer si ledit ensemble (S_{PU} ; 150) d'au moins deux unités de traitement (PU₁, PU₂, ..., PUₙ ; 151, 152, ..., 15n) en tout est capable de traiter lesdits paquets.

4. Procédé (200) tel que revendiqué dans l'une quelconque des revendications 1 à 3, dans lequel :
- ledit algorithme de traitement de paquets en parallèle (Aₚₐᵣ) est un algorithme à seau de jetons au moins partiellement non synchronisé ;
- ledit coût total en termes de paquets (Cₜₒₜ) est lié à un nombre total de jetons (Nₜₒₜ) ;
- ledit nombre total de jetons (Nₜₒₜ) est réparti sur ledit ensemble (SPU ; 150) sous forme de nombres fractionnaires de jetons (N₁, N₂, ..., Nₙ) pour lesdites au moins deux unités de traitement au moins partiellement non synchronisées (PU₁, PU₂, ..., PUₙ ; 151, 152, ..., 15n), respectivement ;
- lesdites parts (C₁, C₂, ..., Cₙ) dudit coût total en termes de paquets (Cₜₒₜ) sont liées auxdits nombres fractionnaires de jetons (N₁, N₂, ... , Nₙ), respectivement.

5. Procédé (200) tel que revendiqué dans la revendication 4, comprenant en outre les étapes suivantes :
- additionner (221) tous lesdits nombres fractionnaires de jetons (N₁, N₂, ..., Nₙ) audit nombre total de jetons (Nₜₒₜ ; Nₜₒₜ = N₁ + N₂ + ...+ Nₙ) ;
- additionner (222) toutes les parts (C₁, C₂, ..., Cₙ) audit coût total en termes de paquets (Cₜₒₜ) ; et
- utiliser (223) ledit nombre total de jetons (Nₜₒₜ) et/ou ledit coût total en termes de paquets (Cₜₒₜ) lors de la commutation (220) vers un traitement selon ledit algorithme de traitement des paquets en série (Aₛₑᵣ) et/ou de la commutation vers un traitement selon un algorithme en mode « drop » (A_{drop}) .

6. Procédé (200) tel que revendiqué dans la revendication 5, dans lequel ledit algorithme de traitement de paquets en série (Aₛₑᵣ) comprend les étapes suivantes :
- incrémenter (250) un nombre total de jetons (Nₜₒₜ) dans le temps plus rapidement que les jetons sont dépensés par ledit algorithme de traitement de paquets en série (Aₛₑᵣ) ; et
- commuter (260) du traitement selon ledit algorithme de traitement de paquets en série (Aₛₑᵣ) audit traitement selon ledit algorithme de traitement de paquets en parallèle (Aₚₐᵣ) lorsque ledit nombre total de jetons (Nₜₒₜ) est supérieur à une valeur seuil de traitement en parallèle (N_{tot_par} ; Nₜₒₜ > N_{tot_par}) .

7. Procédé (200) tel que revendiqué dans la revendication 6, dans lequel ladite valeur seuil de traitement en parallèle (N_{tot_par}) est augmentée d'une valeur (N_{debt_sum}) correspondant à une dette totale (Dₜₒₜ) lorsque ledit coût total en termes de paquets (Cₜₒₜ) inclut ladite dette totale (Dₜₒₜ).

8. Procédé (200) tel que revendiqué dans l'une quelconque des revendications 4 à 7, comprenant en outre les étapes suivantes :
- commuter (271) du traitement selon ledit algorithme de traitement de paquets en série (Aₛₑᵣ) au traitement selon un algorithme en mode « drop » (A_{drop}) ; et
- traiter (272) lesdits paquets selon ledit algorithme en mode « drop » (A_{drop}) en utilisant ledit ensemble (S_{PU} ; 150) desdites au moins deux unités de traitement au moins partiellement non synchronisées (PU₁, PU₂, ..., PUₙ ; 151, 152, ..., 15n) si au moins un énoncé est vrai dans le groupe d'énoncés suivant :
- ledit nombre total de jetons (Nₜₒₜ) a une valeur nulle (0) ; (Nₜₒₜ = 0) ; et
- ledit coût total en termes de paquets (Cₜₒₜ) dépasse ledit nombre total de jetons (Nₜₒₜ ; Cₜₒₜ > Nₜₒₜ) .

9. Procédé (200) tel que revendiqué dans l'une quelconque des revendications 4 à 8, comprenant en outre, si ledit nombre total de jetons (Nₜₒₜ) dépasse ledit coût total en termes de paquets (Cₜₒₜ ; Nₜₒₜ > Cₜₒₜ) , les étapes suivantes :
- commuter (281) du traitement selon un algorithme en mode « drop » (A_{drop}) à un traitement selon ledit algorithme de traitement de paquets en série (Aₛₑᵣ) ; et
- traiter (230) desdits paquets selon ledit algorithme de traitement de paquets en série (Aₛₑᵣ).

10. Procédé (200) tel que revendiqué dans les revendications 1 à 9, comprenant en outre les étapes suivantes :
- définir (291) un ensemble d'au moins un groupe actif (G₁, G₂, ...G_{K}), chaque groupe étant lié à un ou plusieurs dispositifs recevant des paquets par l'intermédiaire d'un nœud de réseau (100) ; et
- allouer (292) au moins une partie de bande passante d'une bande passante disponible dans ledit réseau (500) pour ledit au moins un groupe actif (G₁, G₂, ...G_{K}) dudit ensemble, respectivement, où ladite allocation (292) est effectuée en parallèle et au moins partiellement de manière non synchronisée pour ledit au moins un groupe actif (G₁, G₂, ...G_{K}) .

11. Procédé (200) tel que revendiqué dans la revendication 10, dans lequel ladite allocation (292) de ladite au moins une partie de bande passante est effectuée de manière à ce que la bande passante disponible soit divisée de manière égale entre les groupes de l'au moins un groupe (G₁, G₂, ...G_{K}) .

12. Procédé (200) tel que revendiqué dans l'une quelconque des revendications 10 et 11, dans lequel ladite allocation (292) de ladite au moins une partie de bande passante comprend en outre les étapes suivantes :
- déterminer (293) si une ou plusieurs parties de bande passante de l'au moins un groupe (G₁, G₂,...G_{K}) sont inutilisées ; et
- réattribuer (294) lesdites une ou plusieurs parties de bande passante inutilisées à un ou plusieurs autres groupes dudit au moins un groupe (G₁, G₂,...G_{K}) avait besoin de plus de bande passante.

13. Procédé (200) tel que revendiqué dans la revendication 12, dans lequel lesdits un ou plusieurs groupes (G₁, G₂,...G_{K}) ayant besoin de plus de bande passante sont en concurrence les uns avec les autres pour les une ou plusieurs parties de bande passante qui sont réattribuées.

14. Programme informatique ayant un code de programme pour exécuter un procédé selon l'une quelconque des revendications 1 à 13 lorsque le programme informatique est exécuté sur un ordinateur.

15. Nœud de réseau (100) d'un réseau à commutation de paquets, le nœud de réseau (100) comprenant un dispositif de traitement (120) agencé pour traiter des paquets à transmettre dans ledit réseau (500), **caractérisé en ce que** le dispositif de traitement (120) est agencé pour exécuter un algorithme de traitement de paquets en série (Aₛₑᵣ) et un algorithme de traitement de paquets en parallèle (Aₚₐᵣ), où :
- l'algorithme de traitement de paquets série (Aₛₑᵣ) permet une utilisation synchronisée d'un ensemble (S_{PU} ; 150) d'au moins deux unités de traitement (PU₁, PU₂, ..., PUₙ ; 151, 152, ..., 15n), où une seule desdites au moins deux unités de traitement (PU₁ ; PU₂ ; ..., PUₙ ; 151 ; 152 ; ... ; 15n) traite les paquets à un moment donné, et les paquets sont traités un par un de manière synchronisée ; et
- l'algorithme de traitement de paquets en parallèle (Aₚₐᵣ) permet une utilisation au moins partiellement non synchronisée dudit ensemble (S_{PU} ; 150) desdites au moins deux unités de traitement (PU₁, PU₂, ..., PUₙ ; 151, 152, ..., 15n), où lesdites au moins deux unités de traitement (PU₁, PU₂, ..., PUₙ ; 151, 152, ..., 15n) traitent les paquets en parallèle d'une manière au moins partiellement non synchronisée ; où
- ledit traitement desdits paquets correspond à un coût total en termes de paquets (Cₜₒₜ), qui est partagé en coopération par lesdites au moins deux unités de traitement (PU₁, PU₂, ..., PUₙ ; 151, 152, ..., 15n) dudit ensemble (S_{PU} ; 150) ;
ledit dispositif de traitement (120) étant agencé pour :
- déterminer (210), lorsque ledit traitement selon ledit algorithme de traitement de paquets en parallèle (Aₚₐᵣ) est utilisé pour traiter lesdits paquets, si des parts (C₁, C₂, ..., Cₙ) dudit coût total en termes de paquets (Cₜₒₜ) pour une ou plusieurs desdites au moins deux unités de traitement (PU₁, PU₂, ..., PUₙ ; 151, 152, ..., 15n) dépassent une capacité de traitement des paquets pour lesdites au moins deux unités de traitement (PU₁, PU₂, ..., PUₙ ; 151, 152, ..., 15n), respectivement, où chacune des parts (C₁, C₂, ..., Cₙ) correspond à un ou plusieurs paquets ; et
- commuter (220) dudit traitement selon ledit algorithme de traitement de paquets en parallèle (Aₚₐᵣ) au traitement selon ledit algorithme de traitement de paquets en série (Aₛₑᵣ) si lesdites parts (C₁, C₂, ..., Cn) dudit coût total en termes de paquets (Cₜₒₜ) pour une ou plusieurs desdites au moins deux unités de traitement (PU₁, PU₂, ..., PUₙ ; 151, 152, ..., 15ₙ), respectivement, sont déterminées (210) comme dépassant ladite capacité.
